# EUROPÄISCHE PATENTANMELDUNG

(11) **EP 4 622 051 A1**
(43) Veröffentlichungstag der Anmeldung: **24.09.2025**
(21) Anmeldenummer: 25164618.8
(22) Anmeldetag: 19.03.2025
(51) Int. Cl.: H02J 7/00, H04M 1/02, H04M 1/04

(54) **HALTEVORRICHTUNG FÜR EIN EINE MAGNETANORDNUNG AUFWEISENDES ELEKTROGERÄT**

(30) Priorität: 21.03.2024 DE 102024108165
(71) Anmelder: Fidlock GmbH, 30659 Hannover (DE)
(72) Erfinder: BOTKUS, Breido, 30175 Hannover (DE); HILLER, Lasse, 30952 Ronnenberg (DE)
(74) Vertreter: Maikowski & Ninnemann Patentanwälte Partnerschaft mbB

(57) **Zusammenfassung**

Die vorgeschlagene Lösung betrifft insbesondere eine Haltevorrichtung für ein eine erste Magnetanordnung (10) aufweisendes Elektrogerät (1), mit einem Sicherungselement (2, 22, 23) zur Fixierung an dem Elektrogerät (1) und einem Halter (3) zur Verbindung mit dem Sicherungselement (2, 22, 23).

Der Halter (3) umfasst eine zweite Magnetanordnung (30), die vorgesehen ist, magnetisch anziehend mit der ersten Magnetanordnung (10) des Elektrogeräts (1) zusammenzuwirken, um den Halter (3) entlang einer Ansetzrichtung (+x) an dem Elektrogerät (1) zu halten. Ferner umfasst der Halter (3) einen Formschlussabschnitt (310, 312), der vorgesehen ist, zusammen mit dem an dem Elektrogerät (1) fixierten Sicherungselement (2, 22, 23) einer Verlagerung des Sicherungselements (2, 22, 23) relativ zu dem Halter (3) quer zur Ansetzrichtung (+x) entgegenzuwirken.

## Beschreibung

Die vorgeschlagene Lösung betrifft insbesondere eine Haltevorrichtung für ein eine erste Magnetanordnung aufweisendes Elektrogerät.

Die Verwendung von schützenden Hüllen für Mobiltelefone ist weithin üblich. Typischerweise wird hierbei das Mobiltelefon formschlüssig in einer Hülle gehalten respektive die Hülle formschlüssig an dem Mobiltelefon fixiert. Die Hülle umgibt dann den Rand des Mobiltelefons umfangsseitig vollständig und überdeckt auch eine Rückwand des Mobiltelefons auf einer von einem Display des Mobiltelefons abgewandten Rückseite. Derartige Hüllen sind heutzutage regelmäßig auch dahingehend angepasst, dass auch mit angebrachter Hülle ein induktives Laden des Mobiltelefons möglich ist.

Ferner sind auch unterschiedliche Halterungen bekannt, um ein Mobiltelefon oder ein anderes Elektrogerät sicher an Flächen innerhalb eines Fahrzeuginnenraums oder an einem Fahrrad zu halten, beispielsweise um ein Mobiltelefon für die Navigation zu nutzen. Hierbei wird das Mobiltelefon typischerweise mechanisch an einem Halter der Halterung fixiert, der wiederum rein mechanisch an einer entsprechenden Fläche oder an dem Fahrrad befestigt wird.

In neuerer Zeit kommen zunehmend Mobiltelefone auf den Markt, die eine Magnetanordnung integrieren. So integrieren beispielsweise einige iPhone^{®}-Modelle eine Magnetanordnung, über die eine Verbindung zu einem Ladegerät für kabelloses Laden unterstützt wird. Derartige Ladegeräte werden unter der Marke MagSafe^{®} vertrieben. Über das magnetische Zusammenwirken der mobiltelefonseitigen Magnetanordnung mit einer weiteren Magnetanordnung in dem Ladegerät wird eine bestimmte Ausrichtung zwischen Ladegerät und Mobiltelefon und ein schwacher Halt des Mobiltelefons am Ladegerät gewährleistet, während induktiv Energie zum Laden des Mobiltelefons übertragen wird.

Es besteht jedoch weiterhin Bedarf für Haltevorrichtungen, die sich eine an einem Elektrogerät bereits integrierte Magnetanordnung, beispielsweise beim induktiven Laden, zunutze machen.

Vor diesem Hintergrund ist eine Haltevorrichtung vorgeschlagen, die für ein eine ersten Magnetanordnung aufweisendes, d. h. gegebenenfalls eine solche erste Magnetanordnung integrierendes, Elektrogerät vorgesehen ist. Diese Haltevorrichtung weist wenigstens ein Sicherungselement zur Fixierung an dem Elektrogerät und einen Halter zur Verbindung mit dem Sicherungselement auf. Der Halter umfasst eine zweite Magnetanordnung, die vorgesehen ist, magnetisch anziehend mit der ersten Magnetanordnung des Elektrogeräts zusammenzuwirken, um den Halter entlang einer Ansetzrichtung an dem Elektrogerät zu halten. Ferner umfasst der Halter einen Formschlussabschnitt, der vorgesehen ist, zusammen mit dem an dem Elektrogerät fixierten Sicherungselement einer Verlagerung des Sicherungselements relativ zu dem Halter quer zur Ansetzrichtung entgegenzuwirken.

Die vorgeschlagene mit einem Halter und einem Sicherungselement wenigstens zweiteilige Haltevorrichtung geht somit von dem Grundgedanken aus, einen Halter magnetisch an einem bereits eine erste Magnetanordnung integrierenden Elektrogerät zu halten, damit der Halter zusätzlich zu der zwischen den ersten und zweiten Magnetanordnungen wirkenden Magnetkraft an dem Elektrogerät gehalten ist, und über ein zusätzliches, an dem Elektrogerät (gegebenenfalls nicht-magnetisch) fixiertes Sicherungselement Kräfte quer zu der Ansetzrichtung (Querkräfte) aufzunehmen. Hierfür umfasst der Halter den Formschlussabschnitt, der in einem mit dem Sicherungselement verbundenen Zustand zusammen mit dem an dem Elektrogerät fixierten Sicherungselement einer Verlagerung des Sicherungselements relativ zu dem Halter (3) quer zur Ansetzrichtung entgegenwirkt. Über die Verbindung zwischen dem Halter und dem Sicherungselement werden dann quer zur Ansetzrichtung wirkende Querkräfte aufgenommen und einer Relativverlagerung zwischen Elektrogerät und Halter entgegengewirkt. Auf diese Weise kann ein Sicherungselement vergleichsweise kostengünstig bereitgestellt werden, insbesondere da hierin keine oder zumindest keine zusätzliche Magnetanordnung für eine magnetische Anbindung an das Elektrogerät vorgesehen werden muss. Der für das magnetische Zusammenwirken mit der ersten Magnetanordnung des Elektrogeräts vorgesehene Halter muss wiederum lediglich im Zusammenwirken mit dem Sicherungselement für die Aufnahme von Querkräften ausgelegt werden, um das Elektrogerät in einer gewünschten Position bezüglich des Halters zu halten. Über den Formschluss zwischen Sicherungselement und Halter kann dann beispielsweise eine Abscherung sowie eine seitliche Bewegung des Elektrogeräts, zum Beispiel bei auftretenden Querbelastungen an dem Elektrogerät infolge von Vibration, Stößen oder Gravitation, entgegengewirkt werden.

Der Formschlussabschnitt kann für einen spielbehafteten oder spielfreien Formschluss mit dem an dem Elektrogerät fixierten Sicherungselement vorgesehen sein, über den (in mit dem Sicherungselement verbundenen Zustand des Halters) einer Verlagerung des Sicherungselements relativ zu dem Halter quer zur Ansetzrichtung entgegengewirkt wird

Im bestimmungsgemäß verbundenen Zustand können die erste Magnetanordnung des Elektrogeräts und die zweite Magnetanordnung des Halters einander gegenüberliegen. Wenn das an dem Elektrogerät fixierte Sicherungselement bestimmungsgemäß mit dem Halter formschlüssig verbunden ist, liegen sich folglich die ersten und zweiten Magnetanordnungen entlang der Ansetzrichtung gegenüber. Grundsätzlich kann hierbei vorgesehen sein, dass die zweite Magnetanordnung an dem Formschlussabschnitt des Halters vorgesehen ist, insbesondere in das Material eingebettet ist oder hierin eingesetzt ist (und z.B. durch Klemmung und/oder Klebung fixiert ist), aus dem der Formschlussabschnitt des Halters ausgeformt ist.

Beispielsweise ist in dem Halter eine ringförmige Magnetanordnung mit einem einzelnen Ringmagnet oder mit einer Vielzahl entlang einer Umfangsrichtung aufeinanderfolgender Einzelmagnete gebildet.

Der Formschlussabschnitt kann grundsätzlich vorgesehen sein, zusammen mit dem Sicherungselement einer Verlagerung des Sicherungselements relativ zu dem Halter wenigstens entlang zweier zueinander senkrechter und jeweils quer zur Ansetzrichtung verlaufenden Raumrichtungen entgegenzuwirken. Hiermit ist insbesondere eingeschlossen, dass über den mit dem Sicherungselement verbundenen Formschlussabschnitt einer Verlagerung des Sicherungselements und damit des Elektrogeräts, bei an dem Elektrogerät fixierten Sicherungselement, relativ zu dem Halter entlang zweier zueinander senkrechter Raumachsen entgegengewirkt wird. Diese Raumachsen verlaufen jeweils quer und damit ebenfalls senkrecht zur Ansetzrichtung, entlang der die ersten und zweiten Magnetanordnungen magnetisch anziehend zusammenwirken. Dies schließt eine Weiterbildung ein, bei der der Formschlussabschnitt in seinem mit dem Sicherungselement verbundenen Zustand einer Verlagerung des Sicherungselements relativ zu dem Halter in allen Raumrichtungen entgegenwirkt, die in einer senkrecht zur Ansetzrichtung verlaufenden Ebene liegen.

In einer Ausführungsvariante weist das Sicherungselement einen Formschlussbereich für den Formschlussabschnitt des Halters auf, wobei bei an den Formschlussbereich bestimmungsgemäß angebrachtem Formschlussabschnitt der Halter und das Sicherungselement formschlüssig miteinander verbunden sind und eine Verlagerung des Sicherungselements relativ zu dem Halter quer zur Ansetzrichtung vollständig blockiert oder zumindest auf ein toleriertes Maß begrenzt wird. Auch hier ist mithin vorgesehen, dass Querkräfte auf das Sicherungselement (zum Beispiel übertragen von dem Elektrogerät, an dem das Sicherungselement fixiert ist) zu keiner oder ein toleriertes Maß zumindest nicht übersteigenden Relativverlagerung zwischen Sicherungselement und Halter quer zur Ansetzrichtung führen.

Grundsätzlich kann vorgesehen sein, dass der Halter nur für eine mechanische Verbindung mit dem Sicherungselement, nicht aber für eine mechanische Verbindung mit dem Elektrogerät vorgesehen ist. Das Halten an dem Elektrogerät kann hierbei beispielsweise vornehmlich oder ausschließlich über das magnetische Zusammenwirken zwischen erster und zweiter Magnetanordnung erfolgen. Hiermit ist jedoch nicht ausgeschlossen, dass zwischen dem Halter und dem Elektrogerät Haltekräfte wirken, wenn der Halter mit dem Sicherungselement verbunden wurde, z.B. adhäsive oder elektrostatische Haltekräfte, durch Unterdruck oder Vakuum erzeugte Haltekräfte oder auf Van-der-Waals-Wechselwirkungen zurückgehende Haltekräfte.

Alternativ oder ergänzend kann vorgesehen sein, dass das an dem Elektrogerät zu fixierende und für die formschlüssige Verbindung mit dem Halter vorgesehene Sicherungselement magnetfrei ist. Das Sicherungselement ist hierbei folglich magnetfrei ausgebildet und enthält dementsprechend kein Magnetelement, insbesondere kein Magnetelement, das mit der ersten oder zweiten Magnetanordnung magnetisch anziehend zusammenwirken kann. Hiermit kann eine klare funktionale Trennung zwischen Sicherungselement und Halter unterstützt werden. Weiterhin lässt sich hiermit eine Kombination des Halters mit vergleichsweise kostengünstig und einfach gehaltenen Sicherungselementen realisieren.

In einer alternativen Ausführungsvariante kann jedoch vorgesehen sein, dass in dem Sicherungselement eine dritte Magnetanordnung vorhanden ist, die vorgesehen ist, ein Magnetfeld der ersten Magnetanordnung zu verstärken und/oder räumlich auszudehnen. Eine dritte Magnetanordnung des Sicherungselements kann somit beispielsweise für das Zusammenwirken der zweiten Magnetanordnung des Halters mit der ersten Magnetanordnung des Elektrogeräts das Magnetfeld der ersten Magnetanordnung in Richtung des Halters verlängern. Hierfür können die erste Magnetanordnung und dritte Magnetanordnung einander anziehen, wenn das Sicherungselement bestimmungsgemäß an dem Elektrogerät angebracht ist. Die Ausrichtung der Pole der dritten Magnetanordnung bezüglich der Ansetzrichtung stimmt somit in einem mit dem Elektrogerät verbundenen Zustand des Sicherungselements mit der Ausrichtung der Pole der ersten Magnetanordnung überein.

In einer Ausführungsvariante ist an dem Formschlussabschnitt des Halters wenigstens ein Bereich ausgebildet, der für ein zumindest teilweises Hintergreifen wenigstens eines Bereichs an dem Sicherungselement vorgesehen ist, insbesondere im Fall einer auftretenden Belastung und damit verbundenen Querkräften auf das Elektrogerät. Bei bestehender formschlüssiger Verbindung zwischen dem Halter und dem Sicherungselement hintergreift folglich der wenigstens eine Bereich des Formschlussabschnitts einen Bereich an dem Sicherungselement, jedenfalls wenigstens im Fall einer auftretenden Belastung und damit verbundenen Querkräften auf das Elektrogerät. In einer möglichen Weiterbildung kann gegebenenfalls zusätzlich auch eine reibschlüssige Verbindung zwischen dem halterseitigen Bereich und dem sicherungselementseitigen Bereich vorgesehen sein, wenn der Halter und das Sicherungselement bestimmungsgemäß formschlüssig miteinander verbunden sind. Insbesondere können das Sicherungselement und der Halter derart aufeinander abgestimmt und miteinander verbindbar sein, dass die reibschlüssige Verbindung erst im Belastungsfall eingegangen wird, um dann den Halter und das Sicherungselement zusätzlich aneinander zu sichern.

In einer Ausführungsvariante ist der wenigstens eine zu hintergreifende Bereich des Sicherungselements zumindest teilweise flexibel. Der zu hintergreifende Bereich des Sicherungselements kann folglich zumindest teilweise flexibel verlagerbar sein. Beispielsweise ist hierfür zumindest der zu hintergreifende Bereich des Sicherungselements aus einem flexiblen Material hergestellt respektive besteht aus einem solchen flexiblen Material. Auf diese Art und Weise kann der zu hintergreifende Bereich des Sicherungselements beim Ansetzen und Anbringen des Halters an das Sicherungselement durch den Formschlussabschnitt nachgeben und verdrängt werden, bis der Formschlussabschnitt eine vorgesehene Formschlussposition bezüglich des Sicherungselements einnimmt und damit dann der zu hintergreifende Bereich an dem Sicherungselement wieder - aufgrund der ihm innewohnenden Flexibilität, gegebenenfalls sogar Elastizität - zurückverlagert wird.

Alternativ kann eine kleineste Querschnittsfläche einer (Formschluss-) Öffnung an einem Formschlussbereich des Sicherungselements größer sein als eine Querschnittfläche des in die Öffnung einzusetzenden Formschlussabschnitts des Halters. Die Querschnittsflächen sind derart bemessen, dass - bei an das Sicherungselement angebrachtem Halter - eine zumindest geringfügige (weniger als 5mm, insbesondere weniger als 2mm) Verlagerung des Halters und des Sicherungselements relativ zueinander und quer zu Ansetzrichtung des Halters zugelassen ist. Der Formschlussabschnitt kann somit nicht nur spielfrei, sondern auch spielbehaftet, d.h., mit Spiel, in den Formschlussbereich des Sicherungselements formschlüssig eingreifen. Erst mit einer Verlagerung des Halters und des Sicherungselements relativ zueinander, z.B. aufgrund auftretender Belastungen, können in einer solchen Ausführungsvariante folglich ein Bereich oder mehrere Bereiche des Formschlussabschnitts des Halters mit einem Bereich oder mehreren Bereichen an einem Rand der Öffnung des Sicherungselements in Kontakt kommen, beispielsweise in hintergreifenden Eingriff gelangen.

Grundsätzlich kann der wenigstens eine für das Hintergreifen vorgesehene Bereich des Halters an dem Formschlussabschnitt, bezogen auf die Ansetzrichtung, radial vorstehend ausgebildet sein.

Alternativ oder ergänzend ist in einer Ausführungsvariante vorgesehen, dass der Formschlussabschnitt des Halters und das Sicherungselement miteinander formschlüssig verbindbar sind, indem der Formschlussabschnitt in einer ersten Ausrichtung bezüglich des Sicherungselements entlang der Ansetzrichtung an das Sicherungselement angesetzt und dann um eine zu der Ansetzrichtung parallele Raumachse relativ zu dem Sicherungselement gedreht wird, damit der Formschlussabschnitt in eine zu der ersten Ausrichtung verschiedenen zweiten Ausrichtung bezüglich des Sicherungselements gebracht wird. In dieser zweiten Ausrichtung hintergreift dann der Formschlussabschnitt das Sicherungselement wenigstens bereichsweise und ist mit dem Sicherungselement bestimmungsgemäß, d. h. in einer vorgegebenen Formschlussposition vorliegend, formschlüssig verbunden. Durch eine Schwenkbewegung des Sicherungselements und des Halters um die zu der Ansetzrichtung parallele Raumachse relativ zueinander werden hier folglich der Halter und das Sicherungselement, z.B. nach Art eines Bajonettverschlusses, in mechanischen Eingriff miteinander gebracht.

In einer möglichen Weiterbildung kann der Halter wenigstens ein zu der zweiten Magnetanordnung beabstandetes zweites Ausrichtmagnetelement aufweisen, das vorgesehen ist, unter Zusammenwirken mit wenigstens einem ersten Ausrichtmagnetelement des Elektrogeräts oder des Sicherungselements die Verlagerung des an das Sicherungselement angesetzten Halters aus der ersten Ausrichtung in die zweite Ausrichtung wenigstens zu unterstützen. Ein zweites Ausrichtmagnetelement des Halters ist mithin vorgesehen, magnetisch anziehend mit einem ersten Ausrichtmagnetelement des Elektrogeräts zusammenzuwirken, um magnetkraftunterstützt den mechanischen Eingriff zwischen Halter und Sicherungselement zu unterstützen. Hierbei kann vorgesehen sein, aufgrund der magnetischen Anziehung der ersten und zweiten Ausrichtmagnetelemente den an das Sicherungselement angesetzten Halter in die zweite Ausrichtung zu verlagern respektive das Sicherungselement und den Halter bestimmungsgemäß in einer vorgegebenen Relativlage zueinander auszurichten und hierdurch den Halter bestimmungsgemäß mit dem an dem Elektrogerät fixierten Sicherungselement formschlüssig zu verbinden. Ein zweites Ausrichtmagnetelement des Halters kann beispielsweise an einem bezüglich der Ansetzrichtung radial nach außen sich erstreckenden Abschnitt des Halters vorgesehen sein, insbesondere in einem solchen Abschnitt des Halters eingebettet sein.

In einer Ausführungsvariante ist der Formschlussabschnitt für einen formschlüssigen Eingriff in eine (Formschluss-) Öffnung an dem Sicherungselement vorgesehen. Alternativ kann an dem Sicherungselement ein Abschnitt ausgebildet sein, der vorgesehen ist, in eine (Formschluss-) Öffnung an dem Formschlussabschnitt des Halters einzugreifen.

Grundsätzlich kann der Formschlussabschnitt umfangsseitig vollständig innerhalb einer (Formschluss-) Öffnung des Sicherungselements aufgenommen sein, wenn das Sicherungselement und der Halter bestimmungsgemäß miteinander verbunden sind. Ebenso kann ein Sicherungselement umfangsseitig vollständig in einer (Formschluss-) Öffnung des Formschlussabschnitts aufgenommen sein. Eine Kontur einer jeweiligen (Formschluss-) Öffnung kann beispielsweise kreisförmig sein, jedoch grundsätzlich auch asymmetrisch oder mehrflächig, d. h. mit unterschiedlich zueinander ausgerichteten, gewölbten und/oder eckigen, langlochförmigen oder gezackten Abschnitten. Ferner kann beispielsweise ein Formschlussbereich des Sicherungselements mit mehreren Öffnungen (zum Beispiel in Form von Durchgangsöffnungen oder Aussparungen und damit gegebenenfalls auch Ausschnitten im Material des Sicherungselements) ausgebildet sein.

Um die mechanische Verbindung zwischen dem Halter und dem Sicherungselement gegebenenfalls zu verstärken, sieht eine mögliche Weiterbildung vor, dass bei einer Ausführungsvariante, bei der ein Formschlussabschnitt in eine Öffnung des Sicherungselements eingreift, zumindest ein Bereich einer die Öffnung berandenden inneren Mantelfläche des Sicherungselements und/oder zumindest ein Bereich einer äußeren Mantelfläche des Formschlussabschnitts mit einer Reibfläche ausgebildet ist. Ebenso kann in einer Ausführungsvariante, bei der für die formschlüssige Verbindung des Halters mit dem Sicherungselement wenigstens ein Abschnitt des Sicherungselements in eine Öffnung an dem Formschlussabschnitt eingreift, vorgesehen sein, dass an zumindest einem Bereich einer die Öffnung berandenden inneren Mantelfläche des Formschlussabschnitts und/oder an zumindest einem Bereich an einer äußeren Mantelfläche des Sicherungselements eine Reibfläche ausgebildet ist. Unter einer Reibfläche wird insbesondere eine Fläche verstanden, die - im Zusammenspiel mit dem jeweiligen Gegenpart (in einem der vorstehend erläuterten Ausführungsbeispiele Formschlussabschnitt oder Sicherungselement), eine Reibung erhöhende Struktur aufweist und/oder aus einem Reibung erhöhenden Material gebildet ist. Unter einer Fläche mit einer eine Reibung erhöhenden Struktur wird hierbei insbesondere eine aufgeraute Fläche, eine Fläche mit Rillen und Fläche mit zahnförmig vorstehenden Reibflanken verstanden.

Eine (Formschluss-) Öffnung an dem Sicherungselement für den Formschlussabschnitt kann beispielsweise als Durchgangsöffnung ausgebildet sein. Indem eine Durchgangsöffnung im Bereich der ersten Magnetanordnung des Elektrogeräts vorgesehen ist, ist in diesem Bereich eine Energie- und/oder Signalübertragung erleichtert. Insbesondere kann über die Durchgangsöffnung eine (körperliche) Kontaktierung des Elektrogeräts durch den Formschlussabschnitt des Halters ermöglicht sein. Der Formschlussabschnitt des Halters kann somit durch die als Durchgangsöffnung ausgebildete (Formschluss-) Öffnung des Sicherungselements das Elektrogerät kontaktieren. Ist eine körperliche Kontaktierung des Elektrogeräts durch den an das Sicherungselement angebrachten Halter vorgesehen, kann die Stirnfläche des Halters an einer Wandung des Elektrogeräts anliegen, wenn der Halter bestimmungsgemäß mit dem an dem Elektrogerät fixierten Sicherungselement verbunden ist. Ein solcher körperlicher Kontakt ist grundsätzlich nicht zwingend. Durch die Ausbildung der Öffnung für den Formschlussabschnitt als Durchgangsöffnung lässt sich beispielsweise auch nur erreichen, dass zwischen einer Wandung des Elektrogeräts und einer in Ansetzrichtung liegenden Stirnfläche des Halters kein Abschnitt des Sicherungselements, sondern gegebenenfalls allenfalls ein schmaler, materialfreier Spalt vorhanden ist.

In einer alternativen Ausführungsvariante ist die (Formschluss-) Öffnung für den Formschlussabschnitt an dem Sicherungselement in Ansetzrichtung verschlossen. Die Öffnung des Sicherungselements ist folglich an einer Seite des Sicherungselements verschlossen, die bei an dem Elektrogerät fixierten Sicherungselement dem Elektrogerät zugewandt ist. Hierbei kann die Öffnung beispielsweise durch einen an dem Sicherungselement ausgeformten Dünnwandabschnitt verschlossen sein oder durch ein separates, an dem Sicherungselement fixiertes Dünnwandelement.

An einem an dem Sicherungselement ausgeformten Dünnwandabschnitt ist eine Wandstärke einer die Öffnung aufweisenden Wandung des Sicherungselements gegenüber an die Öffnung angrenzender Abschnitte der Wandung reduziert. Dies schließt beispielsweise ein, dass die Wandstärke des Dünnwandabschnitts lediglich einen Bruchteil der Wandstärke der angrenzenden Abschnitte beträgt. Beispielsweise beträgt die Wandstärke des Dünnwandabschnitts höchstens 50% oder höchstens 20-30% der Wandstärke der angrenzenden Abschnitte, insbesondere höchstens 50% oder 20-30% einer mittleren Wandstärke der keine Öffnung aufweisenden Abschnitte der Wandung des Sicherungselements.

Beim Verschließen der Öffnung an dem Sicherungselement durch ein separates, an dem Sicherungselement fixiertes Dünnwandelement, kann das Dünnwandelement eine entsprechende geringere Wandstärke im Vergleich zu der Wandstärke der die Öffnung an dem Sicherungselement berandeten Wandung aufweisen. Insbesondere kann das Dünnwandelement durch eine Folie gebildet sein. Das separate Dünnwandelement kann beispielsweise durch Kleben an dem Sicherungselement fixiert sein oder zur Fixierung an dem Elektrogerät vorgesehen sein. Beispielsweise kann ein Sicherungselement durch eine Hülle für ein Mobiltelefon mit einem rückseitigen Loch als Öffnung für den Halter vorgesehen werden. Über eine Folie wird diese Durchgangsöffnung auf einer dem Elektrogerät zugewandten Innenseite der Hülle verschlossen, bevor das Elektrogerät mit der Hülle verbunden wird. Mit dem Verschließen der Öffnung wird beispielsweise eine Verschmutzung oder Beschädigung des Elektrogeräts im Bereich der Durchgangsöffnung verhindert. Über die zweite Magnetanordnung des Halters kann aber zum Beispiel trotz der dünnen Folie ohne weiteres eine drahtlose Energie- und/oder Signalübertragung erfolgen. Ferner kann an einem Dünnwandelement der Haltevorrichtung, insbesondere einer Folie, eine Reibfläche für das Zusammenwirken mit dem Halter vorgesehen sein.

Ist eine Stirnfläche des Formschlussabschnitts für eine Kontaktierung des Elektrogeräts (durch eine Durchgangsöffnung an dem Sicherungselement hindurch), eines Dünnwandelements oder eines Dünnwandabschnitts vorgesehen, kann an der Stirnfläche des Formschlussabschnitts gegebenenfalls eine Reibfläche ausgebildet sein, um über die anliegende Stirnfläche eine zusätzliche nicht-magnetische Verbindung mit dem Halter zu erreichen oder zumindest in bestimmten Belastungssituationen zu unterstützen. Auch hier wird unter einer Reibfläche wieder eine Fläche verstanden, die - im Zusammenspiel mit dem jeweiligen Gegenpart (hier einer Wandung des Elektrogeräts, einem Dünnwandelement oder einem Dünnwandabschnitt des Sicherungselements) - eine Reibung erhöhende Struktur aufweist und/oder aus einem Reibung erhöhenden Material gebildet ist.

Alternativ oder ergänzend kann an einem Dünnwandabschnitt, einem Dünnwandelement oder einem zusätzlich zum Halter und dem Sicherungselement vorgesehenen Zusatzelement der Haltevorrichtung ein Abschnitt ausgebildet sein, mit dem der Formschlussabschnitt mechanisch zusammenwirkt, beispielsweise um das Ansetzen des Halters an das Sicherungselement oder das Elektrogerät zu unterstützen und/oder eine bestimmte Positionierung des Halters bezüglich des Sicherungselements oder des Elektrogerät vorzugeben. Beispielsweise kann in diesem Zusammenhang vorgesehen sein, dass ein Dünnwandelement oder Zusatzelement an das Elektrogerät klebbar ist, das für eine reib- und/oder formschlüssige Verbindung mit dem Formschlussabschnitt des Halters eingerichtet und vorgesehen ist. Beispielsweise kann ein Dünnwandelement oder eine Zusatzelement in eine von dem Sicherungselement ausgebildete Durchgangsöffnung ragen oder dieser gegenüberliegen, sodass der in die Durchgangsöffnung des Sicherungselements eingreifende Formschlussabschnitt mit zumindest einem Abschnitt des an das Elektrogerät geklebten Dünnwandelements oder Zusatzelements reib- und/oder formschlüssig verbindbar ist.

Grundsätzlich kann das Sicherungselement beispielsweise ringförmig oder scheibenförmig ausgebildet sein. Insbesondere kann ein ringförmiges oder scheibenförmiges Sicherungselement Teil einer Hülle für das Elektrogerät oder an einer solchen Hülle fixiert sein. Es kann sich bei dem Sicherungselement aber auch um ein einzelnes ringförmiges oder scheibenförmiges Bauteil handeln, das direkt an einer Fläche des Elektrogeräts, beispielsweise einer Rückwand eines Mobiltelefons, zu fixieren ist. Insbesondere kann für diese Fixierung an dem Sicherungselement eine Klebefläche vorgesehen sein.

In einer alternativen Ausführungsvariante ist das Sicherungselement als Hülle für das Elektrogerät ausgebildet. Eine solche Hülle kann grundsätzlich mit dem Elektrogerät verklebt sein. Alternativ oder ergänzend ist eine formschlüssige Verbindung der Hülle und dem Elektrogerät vorgesehen.

Es wird grundsätzlich als vorteilhaft erachtet, wenn das Sicherungselement an dem Elektrogerät fixierbar und damit derart starr verbindbar ist, dass eine Verlagerung des Elektrogeräts und des Sicherungselements relativ zueinander ausgeschlossen ist, wenn der Halter an dem Sicherungselement angebracht und mit dem Sicherungselement formschlüssig verbunden ist.

Wie bereits vorstehend erläutert, kann der Halter grundsätzlich auch für eine Energie- und/oder Signalübertragung, insbesondere für kabelloses Laden eingerichtet und vorgesehen sein. In einem solchen Fall kann der Halter beispielsweise eine entsprechende Elektronik umfassen. Insbesondere kann der Halter für ein induktives Laden gemäß dem Qi-Standard auf Basis der Version 1.0, 1.1, 1.2 oder 1.3 oder einer nachfolgenden Version eingerichtet und vorgesehen sein und eine hiermit kompatible Elektronik für eine Energie- und/oder Signalübertragung umfassen.

Grundsätzlich kann der Halter als Zubehörteil für das Elektrogerät oder als Kopplungsteil für eine mechanische und/oder elektrische Kopplung des Elektrogeräts über den Halter mit wenigstens einer weiteren Komponente eingerichtet und vorgesehen sein. Ist der Halter als Zubehörteil für das Elektrogerät vorgesehen, kann der Halter beispielsweise als Ladegerät oder als Geldklammer oder Kreditkartenetui ausgebildet sein. Letzteres kann insbesondere im Zusammenspiel mit einem Mobiltelefon als Elektrogerät vorgesehen sein. Ist der Halter als Kopplungsteil vorgesehen, dient der magnetisch an dem Elektrogerät zu haltende und mechanisch mit dem Sicherungselement zu verbindende Halter der mechanischen und/oder elektrischen Verbindung mit wenigstens einer weiteren Komponente. Bei der weiteren Komponente kann es sich beispielsweise um eine Befestigungseinheit für die Anordnung des Elektrogeräts an einer Wand oder einem Teil eines Fahrzeugs, beispielsweise einem Armaturenbrett eines Kraftfahrzeugs oder einem Lenker eines Fahrrads, handeln. Alternativ oder ergänzend kann über den Halter eine Kopplung mit einem Standfuß für die Anordnung des Elektrogeräts an einer Standfläche vorgesehen sein.

Ist über den Halter eine elektrische Kopplung vorgesehen, kann hierfür an dem Halter wenigstens ein elektrischer Anschluss vorgesehen sein. Beispielsweise handelt es sich hierbei um einen USB-C-Anschluss.

Alternativ oder ergänzend kann der Halter selbst für ein Halten des Elektrogeräts an einer Wand, Fläche und/oder einer Komponente eines Fahrzeugs, insbesondere an einer Innenraumkomponente eines Kraftfahrzeugs (wie ein Armaturenbrett oder eine Mittelkonsole) oder an einer Komponente eines Zweirads, insbesondere eines Fahrrads, eingerichtet und vorgesehen sein.

Die vorgeschlagene Lösung bezieht sich ferner auf die Verwendung eines Halters mit einer zweiten Magnetanordnung für die Verbindung mit einem eine erste Magnetanordnung aufweisenden Elektrogerät, an dem ein Sicherungselement fixiert ist. Der zu verwendende Halter ist hierbei eingerichtet und vorgesehen, formschlüssig mit dem Sicherungselement verbunden zu werden, um einer Verlagerung des Elektrogeräts relativ zu dem Halter entgegenzuwirken. Ferner ist der Halter eingerichtet und vorgesehen, an dem Elektrogerät über das Zusammenwirken der ersten und zweiten Magnetanordnungen gehalten zu werden.

Ein entsprechender Halter ist somit auch insbesondere mit Hüllen für Mobiltelefone kombinierbar, die im Bereich einer ersten Magnetanordnung, die in dem Elektrogerät für ein induktives Laden integriert ist, eine Öffnung aufweisen. Eine solche Hülle würde hierbei ein Sicherungselement für die mechanische Verbindung des Halters darstellen. Die vorgeschlagene Verwendung deckt somit auch eine Ausführungsvariante ab, bei der der Halter für den formschlüssigen Eingriff in eine Öffnung an einem Sicherungselement in Form einer Hülle für ein Mobiltelefon vorgesehen ist respektive hierfür verwendet wird.

Die beigefügten Figuren veranschaulichen exemplarisch mögliche Ausführungsvarianten der vorgeschlagenen Lösung.

Hierbei zeigen:
- Figur 1: eine Explosionsansicht einer ersten Ausführungsvariante einer vorgeschlagenen Haltevorrichtung mit einem Halter und einem Sicherungselement in Form einer Hülle für ein Mobiltelefon;
- Figur 2: die Haltevorrichtung der Figur 1 in zusammengebautem Zustand;
- Figuren 3A-3B: in verschiedenen Ansichten die Haltevorrichtung mit einem noch nicht an ein Sicherungselement in Form einer Hülle angebrachten Halter;
- Figur 4: eine Draufsicht auf die Haltevorrichtung mit dem Halter und dem Sicherungselement in dem unverbundenen Zustand der Figuren 3A und 3B;
- Figur 5: eine Schnittdarstellung entsprechend der Schnittlinie B-B der Figur 4;
- Figur 6: in mit der Figur 5 übereinstimmender Schnittdarstellung die Haltevorrichtung in zusammengebautem Zustand;
- Figuren 7-8B: in mit den Figuren 2, 3A und 3B übereinstimmenden Ansichten eine weitere Ausführungsvariante einer Haltevorrichtung;
- Figur 9: eine Draufsicht auf die Haltevorrichtung mit dem Halter und dem Sicherungselement in dem unverbundenen Zustand der Figuren 8A und 8B;
- Figur 10: eine Schnittdarstellung entsprechend der Schnittlinie B-B der Figur 10;
- Figur 11: in mit der Figur 10 übereinstimmender Schnittdarstellung die Haltevorrichtung in zusammengebautem Zustand;
- Figur 12: in mit der Figur 11 übereinstimmender Ansicht die Haltevorrichtung im zusammengebauten Zustand unter Darstellung einer, zum Beispiel gewichtskraftbedingt, erfolgten Verlagerung des Sicherungselements relativ zu dem Halter;
- Figur 12A: eine vergrößerte Darstellung des Ausschnitts der Figur 12 unter Veranschaulichung einer reibschlüssigen Anlage von Flächen des Halters und des Sicherungselements aneinander;

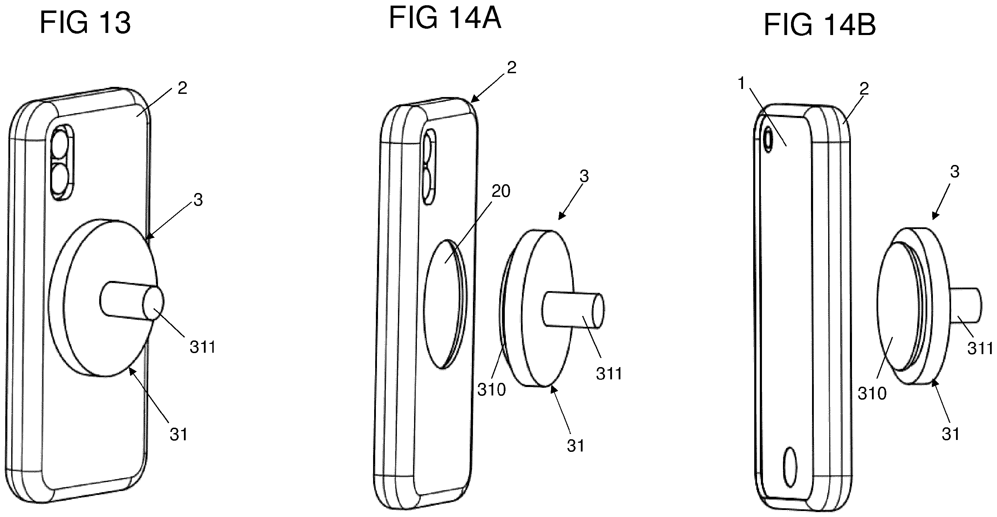

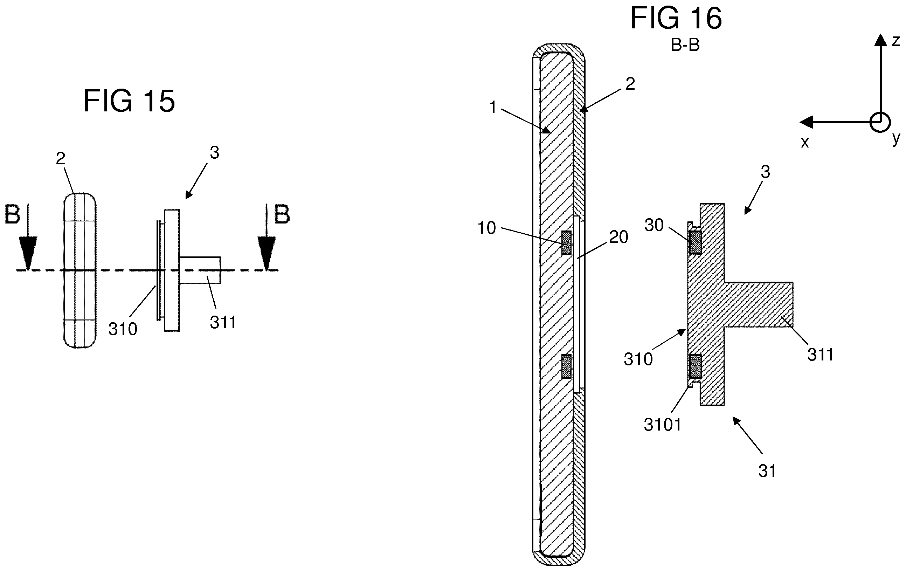

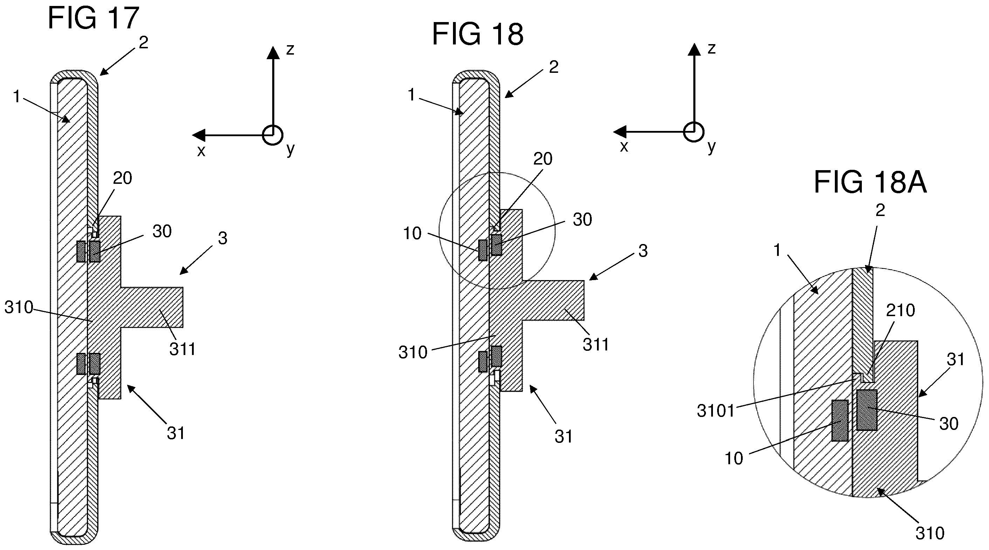

- Figuren 13-18A: in mit den Figuren 7 bis 12A übereinstimmenden Ansichten eine weitere Ausführungsvariante einer vorgeschlagenen Haltevorrichtung;
- Figuren 19-23: in mit den Figuren 13 bis 17 übereinstimmenden Ansichten eine weitere Ausführungsvariante einer vorgeschlagenen Haltevorrichtung, bei der eine Öffnung an dem Sicherungselement durch einen dünnwandigen Abschnitt (Dünnwandabschnitt) des Sicherungselements verschlossen ist;
- Figur 24: eine Explosionsdarstellung einer weiteren Ausführungsvariante einer vorgeschlagenen Haltevorrichtung, bei der ein Dünnwandelement in Form einer Folie zum Verschließen der Öffnung an dem Sicherungselement vorgesehen ist;
- Figur 25-28: in mit den Figuren 19 bis 22 übereinstimmenden Ansichten die Haltevorrichtung der Figur 24;
- Figur 29: in mit der Figur 28 übereinstimmender Schnittdarstellung die Haltevorrichtung der Figuren 24 bis 28 im verbundenen Zustand;
- Figur 29A: eine vergrößerte Ansicht des Ausschnitts der Figur 29;
- Figuren 30-35: in mit den Figuren 24 bis 29 übereinstimmenden Ansichten eine weitere Ausführungsvariante einer vorgeschlagenen Haltevorrichtung mit einem ringförmigen Sicherungselement;
- Figuren 36-41: in mit den Figuren 30 bis 35 übereinstimmenden Ansichten eine weitere Ausführungsvariante einer vorgeschlagenen Haltevorrichtung mit einem scheibenförmigen Sicherungselement;
- Figuren 42-47: in mit den Figuren 36 bis 41 übereinstimmenden Ansichten eine weitere Ausführungsvariante einer vorgeschlagenen Haltevorrichtung mit scheibenförmigem Sicherungselement ohne zusätzliche Hülle für das Elektrogerät;
- Figuren 48-53: in mit den Figuren 42 bis 47 übereinstimmenden Ansichten eine weitere Ausführungsvariante einer vorgeschlagenen Haltevorrichtung mit einem kreisringförmigen Sicherungselement ohne Hülle für das Elektrogerät;
- Figur 54: eine Explosionsdarstellung für einer weiteren Ausführungsvariante einer vorgeschlagenen Haltevorrichtung mit einem scheibenförmigen Sicherungselement integriert in eine Öffnung einer Hülle für ein Elektrogerät;
- Figuren 55-59: in mit den Figuren 48 bis 53 übereinstimmenden Ansichten die Haltevorrichtung der Figur 54;
- Figur 60: eine Explosionsdarstellung einer weiteren Ausführungsvariante einer vorgeschlagenen Haltevorrichtung, bei der von einem Formschlussabschnitt des Halters an einer Durchgangsöffnung einer Hülle zu hintergreifende Bereiche für die formschlüssige Verbindung des Halters mit der Hülle vorgesehen sind ;
- Figur 61: die Haltevorrichtung der Figur 60 in zusammengebautem Zustand;
- Figuren 62A-62B: in verschiedenen Ansichten die Haltevorrichtung der Figuren 60 und 61 mit einem noch nicht an ein Sicherungselement in Form einer Hülle angebrachten Halter;
- Figur 63: eine Ansicht von oben auf die Haltevorrichtung der Figuren 60 bis 62B in einem unverbundenen Zustand;
- Figur 64: eine Schnittdarstellung entsprechend der Schnittlinie A-A der Figur 63;
- Figur 65: eine Ansicht von oben auf die Haltevorrichtung der Figuren 60 bis 64 nach einer weiteren Annäherung des Halters an das Sicherungselement;
- Figur 66: eine Schnittdarstellung ansprechen der Schnittlinie A-A der Figur 65;
- Figur 67: eine Ansicht auf die Haltevorrichtung der Figur 65 von hinten;
- Figur 68: eine Schnittdarstellung gemäß der Schnittlinie B-B der Figur 67;
- Figur 69: in vergrößertem Maßstab ein Detail der Figur 68;
- Figuren 70-74: in mit den Figuren 65-69 übereinstimmenden Ansichten die Haltevorrichtung nach vollständigem Ansetzen des Halters an das Sicherungselement entlang einer Ansetzrichtung;
- Figuren 75-79: in mit den Figuren 70 bis 74 übereinstimmenden Ansichten die Haltevorrichtung mit dem Halter in einer bestimmungsgemäß eingenommenen Formschlussposition und damit einer gegenüber dem in den Figuren 70-74 dargestellten Zustand veränderten Ausrichtung des Halters bezüglich des Sicherungselements;
- Figuren 80-99: in mit den Figuren 60-79 übereinstimmenden Ansichten eine weitere Ausführungsvariante einer vorgeschlagenen Haltevorrichtung, bei der ebenfalls unter Schwenken des Halters und des Sicherungselements relativ zueinander ein Formschluss zwischen Halter und Sicherungselement hergestellt wird;
- Figuren 100-101: in Explosionsdarstellung und Schnittdarstellung eine weitere Ausführungsvariante einer vorgeschlagenen Haltevorrichtung mit einer in die Hülle integrierten dritten Magnetanordnung;
- Figuren 102-104: in verschiedenen Ansichten eine auf der Ausführungsvariante der Figuren 1 bis 6 basierende Weiterbildung unter Darstellung von einer in das Mobiltelefon integrierten Induktionsspule und einer in den Halter integrierten Induktionsspule für ein induktives Laden des Mobiltelefons und/oder drahtloses Übertragen von Signalen;
- Figuren 105A-105L: jeweils in Rückansicht verschiedene Ausführungsvarianten einer Hülle für das Mobiltelefon mit unterschiedlich gestalteten Öffnungen für einen Halter einer Ausführungsvariante der vorgeschlagenen Haltevorrichtung.

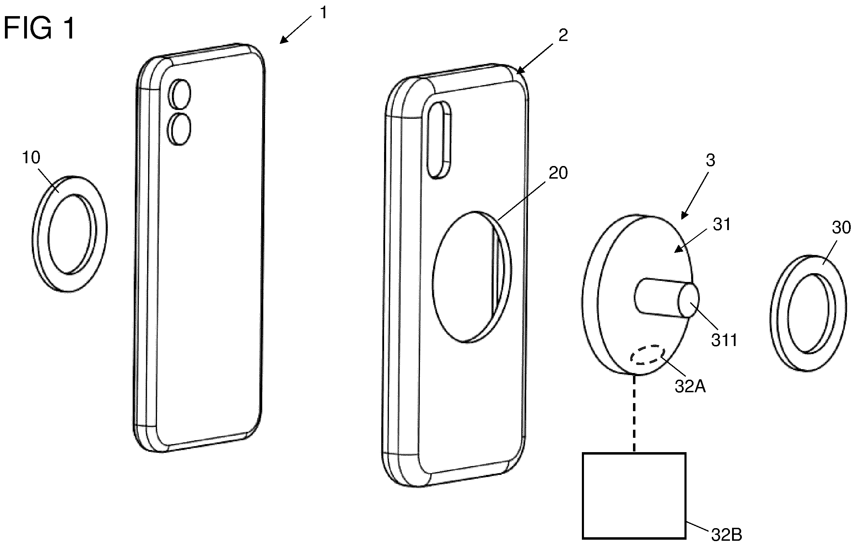

Die Figur 1 zeigt in Explosionsdarstellung eine erste Ausführungsvariante einer vorgeschlagenen Haltevorrichtung für ein Elektrogerät, hier in Form eines Mobiltelefons 1.

Das Mobiltelefon 1 integriert eine erste Magnetanordnung 10. Die vorliegend ringförmig gestaltete Magnetanordnung 10 ist typischerweise für die Positionierung von Spulen für ein induktives Laden des Mobiltelefons vorgesehen und innerhalb eines Gehäuses des Mobiltelefons 1 untergebracht.

Teil der Haltevorrichtung für das Mobiltelefon 1 ist ein Sicherungselement in Form einer Hülle 2. Die Hülle 2 kann hierbei beispielsweise nach Art einer konventionellen Smartphone-Hülle gestaltet sein und insbesondere Durchgangsöffnungen für eine oder mehrere Kameras des Mobiltelefons 1 aufweisen, die an einer Rückseite des Mobiltelefons 1 vorgesehen sind. Eine Durchgangsöffnung für eine Kamera des Mobiltelefons 1 ist dementsprechend in einer Rückwand der Hülle vorgesehen. Ferner weist die Hülle 2 an ihrer Rückwand vorliegend eine als Durchgangsöffnung gestaltete (Formschluss-) Öffnung 20, die hier exemplarisch mit einer Kreiskontur gestaltet ist. Über diese Öffnung 20 in der Hülle 2 ist der Bereich an der Rückseite des Mobiltelefons 1 zugänglich, hinter dem sich die erste Magnetanordnung 10 befindet.

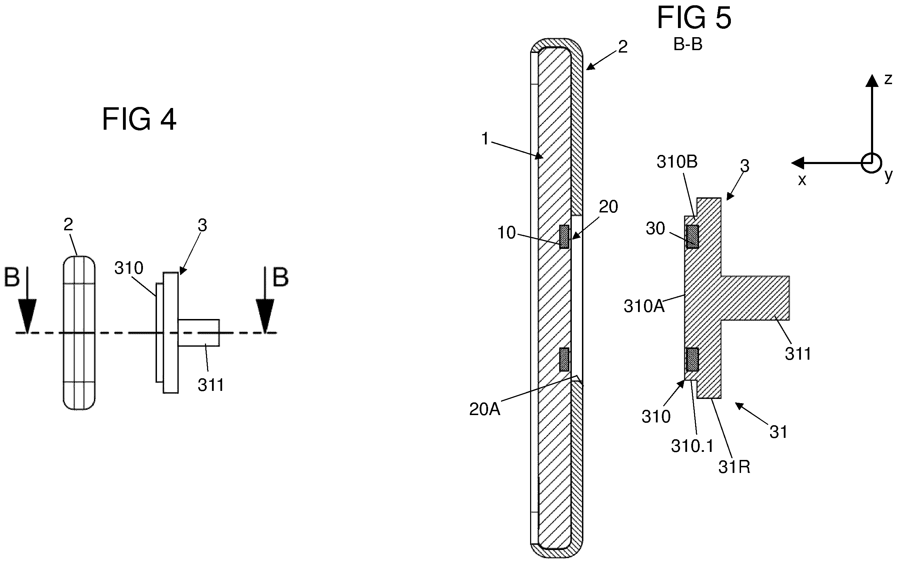

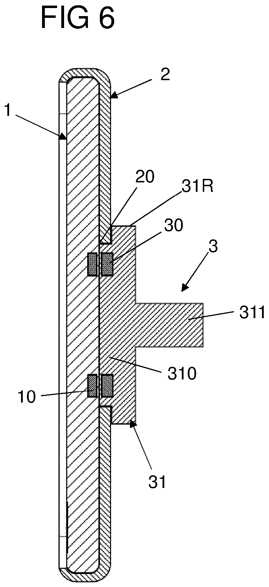

Bei der vorgeschlagenen Haltevorrichtung ist ferner ein Halter 3 mit einem - vorliegend exemplarisch kreisscheibenförmigen - Halterkörper 31 vorgesehen, der in die Öffnung 20 der Hülle 2 formschlüssig eingreifen kann. Der Halter 3 weist eine zweite, ebenfalls kreisringförmig gestaltete Magnetanordnung 30 auf, über die im Zusammenspiel mit der ersten Magnetanordnung 10 des Mobiltelefons 1 eine drahtlose Energie- und/oder Signalübertragung an das Mobiltelefon 1 ermöglicht ist, wenn der Halter 3 in unmittelbarer Nähe (d.h. unterhalb eines definierten Maximalabstands) zu der ersten Magnetanordnung 10 positioniert wird. Wie insbesondere anhand der nachfolgend noch näher diskutierten Schnittdarstellungen der Figuren 5 und 6 veranschaulicht ist, ist die zweite Magnetanordnung 30 hierbei in einem als Eingriffsabschnitt 310 gestalteten Formschlussabschnitt des Halters 3 untergebracht. Die zweite Magnetanordnung 30 ist hierfür innerhalb des Materials eingebettet, insbesondere vollständig aufgenommen, aus dem der Halterkörper 31 und der Eingriffsabschnitt 310 ausgeformt sind. Alternativ kann die zweite Magnetanordnung 30 in eine Aussparung des Eingriffsabschnitts 310 eingesetzt sein. In der Aussparung kann die zweite Magnetanordnung 30 beispielsweise klemmend und/oder über eine Klebung fixiert sein.

Der Halter 3 kann grundsätzlich als Zubehörteil für das Mobiltelefon 1 vorgesehen sein und beispielsweise eine Geldklammer, ein Scheckkartenetui und/oder ein Ladegerät integrieren. Für eine Funktion als Ladegerät kann der Halter 3 eine Elektronik 32B für eine Energie- und/oder Signalübertragung enthalten. Insbesondere kann es sich hierbei um eine Elektronik für ein induktives Laden gemäß dem Qi-Standard in der Version 1.0, 1.1, 1.2 oder 1.3 oder einer nachfolgenden Version handeln. Alternativ oder ergänzend kann an dem Halterkörper 31 ein Anschluss 32A für den Anschluss eines Verbindungskabels vorgesehen sein. Beispielsweise ist der Anschluss 32A als USB-C-Anschlussbuchse ausgestaltet.

Für eine etwaige mechanische Kopplung des Halters 3 mit wenigstens einer weiteren Komponente ist an dem Halterkörper 31 ein Endstück oder Verbindungselement 311 vorgesehen, das vorliegend exemplarisch zapfen- oder stiftförmig ausgeführt ist. Über ein Endstück oder Verbindungselement 311 kann der Halter 31 beispielsweise an eine Komponente zur Wandbefestigung, einen Standfuß oder eine Befestigungseinheit für die Anbringung an oder in einem Fahrzeug montiert werden, bevor oder nachdem der Halter 3 mit der Hülle 2 verbunden wird.

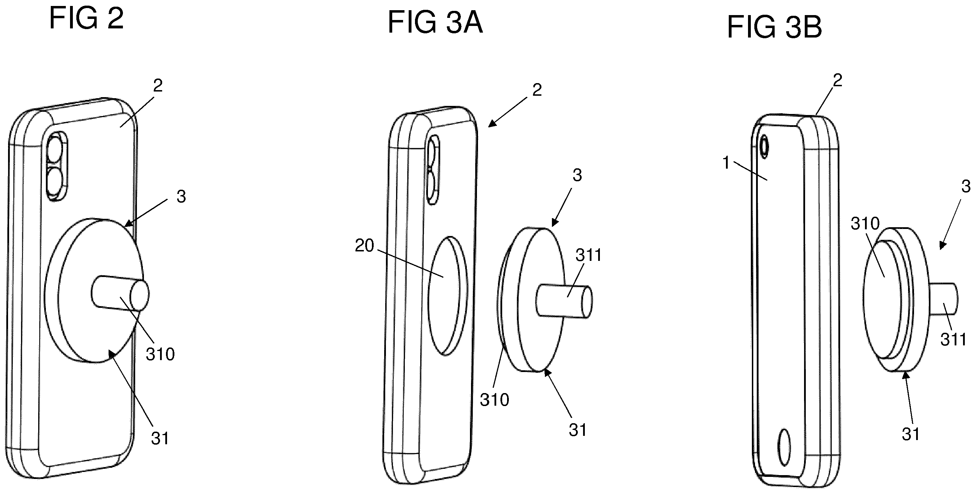

Die Figuren 2 bis 6 zeigen in verschiedenen Ansichten weitere Details der Haltevorrichtung der Figur 1.

Die Figur 2 zeigt in perspektivischer Ansicht einen zusammengebauten Zustand der Haltervorrichtung, in dem der Halter 3 an der Hülle 2 und dem Mobiltelefon 1 festgelegt ist und mit dem Halterkörper 31 an der Rückwand der Hülle 2 vorsteht. Aus den perspektivischen Darstellungen der Figuren 3A und 3B ist ferner ein unverbundener Zustand des Halters 3 und der Hülle 2 ersichtlich. Der Halter 3 weist an dem Halterkörper 31 einen in einer Ansetzrichtung +x axial vorstehenden - hier ebenfalls kreisscheibenförmigen - Eingriffsabschnitt 310 auf, über den der Halter 3 formschlüssig mit der Hülle 2 verbindbar ist. So kann der Eingriffsabschnitt 310 entsprechend den Darstellungen der Figuren 4 und 5 entlang der Ansetzrichtung +x formschlüssig in die Öffnung 20 der Hülle 2 eingesetzt werden, sodass der Eingriffsabschnitt 310 umfangsseitig vollständig innerhalb der Öffnungen 20 aufgenommen ist (vgl. hierzu auch die Schnittdarstellung der Figur 6).

Das Ansetzen des Halters 3 an die Hülle 2, die formschlüssig an dem Mobiltelefon 1 fixiert ist, erfolgt folglich entlang der Ansetzrichtung +x. Die Ansetzrichtung +x ist vorliegend im Wesentlichen oder genau senkrecht zu der Rückseite des Mobiltelefons 1 und damit im Wesentlichen senkrecht zu einer yz-Ebene entlang der sich die Rückwand der Hülle 2 mit der Öffnung 20 erstreckt. Entlang der Ansetzrichtung +x wirken die ersten und zweiten Magnetanordnungen 10 und 30 magnetisch einander anziehend zusammen, wenn der Eingriffsabschnitt 310 dem in der Hülle 2 befindlichen Mobiltelefon 1 ausreichend angenähert wurde. Über die magnetische Anziehung der Magnetanordnungen 10 und 30 wird dann der Halter 3 an dem Mobiltelefon 1 gehalten. Im bestimmungsgemäß verbundenen Zustand des Halters 3 und der Hülle 2 entsprechend der Figuren 2 und 6 sichert wiederum der Formschluss des Formschlussabschnitts 310 und der Hülle 2 das Mobiltelefon 1 gegen eine Verlagerung relativ zu dem Halter 3 in zu der Ansetzrichtung +x senkrechte Raumrichtungen ±z und ±y.

Mit der Gestaltung der Öffnung 20 für den formschlüssigen Eingriff des Eingriffsabschnitts 310 des Halters 3 als Durchgangsöffnung liegt der bestimmungsgemäß an die Hülle 2 angesetzte Halter 3 mit einer in Ansetzrichtung +x liegenden Stirnfläche 310A des Eingriffsabschnitts 310 der Rückseite des Mobiltelefons 1 im Bereich der ersten Magnetanordnung 10 unmittelbar gegenüber. Hierdurch ist eine ungehinderte Energie- und/oder Signalübertragung. Gegebenenfalls kann der Eingriffsabschnitt 310 mit seiner Stirnfläche 310A die Rückseite des Mobiltelefons 1 sogar berühren und damit kontaktieren.

Bei der Ausführungsvariante der Figuren 1 bis 6 ist der Eingriffsabschnitt 310 axial vorstehend zu einem Randabschnitt 31R des Halterkörpers 31 ausgebildet. Der Eingriffsabschnitt 310 geht dabei in den Randabschnitt 31R, der vorliegend eine größeren Durchmesser als der Eingriffsabschnitt 310 aufweist, über einen Übergangsbereich 310.1 über. Der Halter 3 ist somit mit dem Randabschnitt 31R und dem Eingriffsabschnitt 310 gestuft ausgeführt. Ist der Halter 3 bestimmungsgemäß an die Hülle 2 gesteckt, liegt vorliegend der Randabschnitt 31R mit einem Teil des Übergangsbereich 310.1 außerhalb der Durchgangsöffnung 20 vor. Gegebenenfalls lässt sich der Eingriffsabschnitt 310 so weit in die Durchgangsöffnung 20 einführen, dass der Randabschnitt 31R an der Rückwand der Hülle 2 anliegen kann. Dies ist jedoch selbstverständlich nicht zwingend. Ebenso ist keine gestufte Ausführung des Halters 3 im Bereich des Eingriffsabschnitts 310 zwingend. So kann der Halter 310 beispielsweise auch nur mit einem einen Formschlussabschnitt 310 aufweisenden Halterkörper 31 ausgebildet sein, der keinen Randabschnitt 31R und damit auch keinen gestuften Übergang zu einem solchen Randabschnitt 31R umfasst.

Zur Verbesserung der Arretierung des Halters 3 an der Hülle 2 kann vorgesehen sein, dass an einer inneren Mantelfläche 20A der Öffnung 20 und/oder an einer äußeren Mantelfläche 310B des Eingriffsabschnitt 310 eine Reibfläche vorgesehen ist, um zusätzlich zu dem Formschluss zwischen Halter 3 und Hülle 2 eine reibschlüssige Verbindung vorzusehen. Ebenso kann die Stirnfläche 310A ganz oder teilweise mit einer Reibfläche ausgebildet sein, um eine Verlagerung des Mobiltelefons 1 relativ zu dem an die Hülle 2 gesteckten Halter 3 zusätzlich zu blockieren oder zumindest zu hemmen, und zwar gerade senkrecht zu der Ansetzrichtung +x. Eine Reibfläche kann beispielsweise durch eine Reibstruktur an der jeweiligen Mantelfläche 20A, 310B oder Stirnfläche 310A gebildet sein. Beispielsweise ist hierfür die jeweilige Fläche zumindest lokal aufgeraut. Alternativ oder ergänzend kann die jeweilige Reibfläche zumindest bereichsweise aus einem Material hergestellt sein, die mit dem Material des jeweiligen Gegenparts einen erhöhten Reibwert aufweist. Beispielsweise kann hierfür eine gummierte Reibfläche vorgesehen sein.

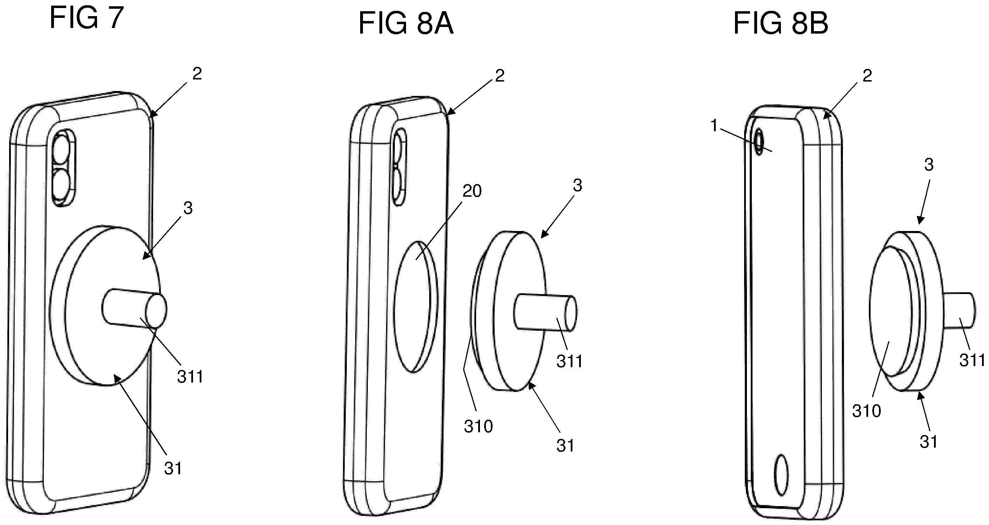

Bei einer weiteren Ausführungsvariante gemäß den Figuren 7 bis 12A ist in einer Weiterbildung der Ausführungsvariante der Figuren 1 bis 6 vorgesehen, dass ein Rand der Öffnung 20 in der Hülle 2 und ein Rand des Eingriffsabschnitts 310 mit Bereichen 200, 3100 ausgebildet sind, die einander hintergreifen, wenn der Halter 3 bestimmungsgemäß entlang der Ansetzrichtung +x an die an dem Mobiltelefon 1 fixierte Hülle 2 gesteckt wurde und Querkräfte in der zu der Ansetzrichtung +x senkrechten yz-Ebene auf das Mobiltelefon 1, die Hülle 2 oder den Halter 3 wirken.

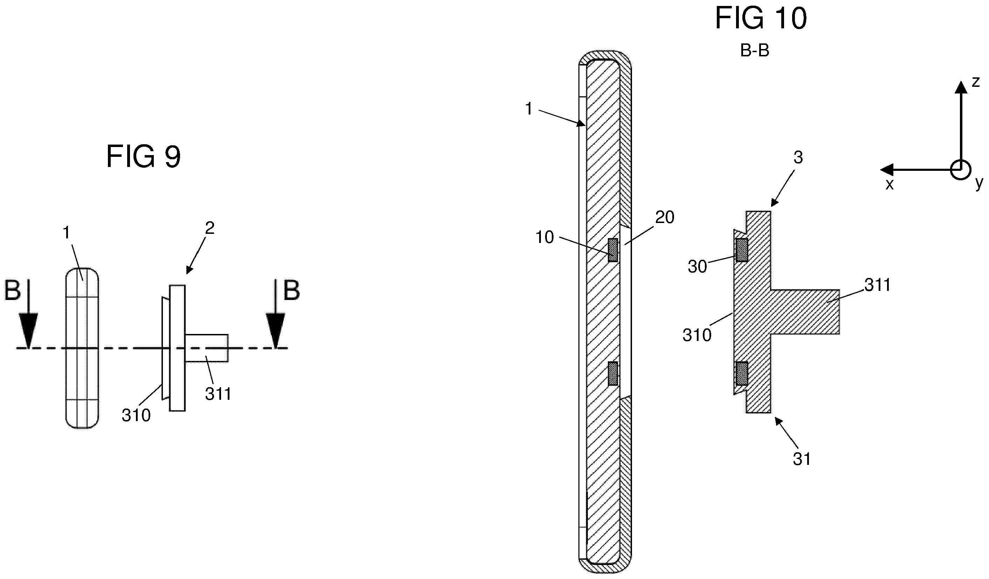

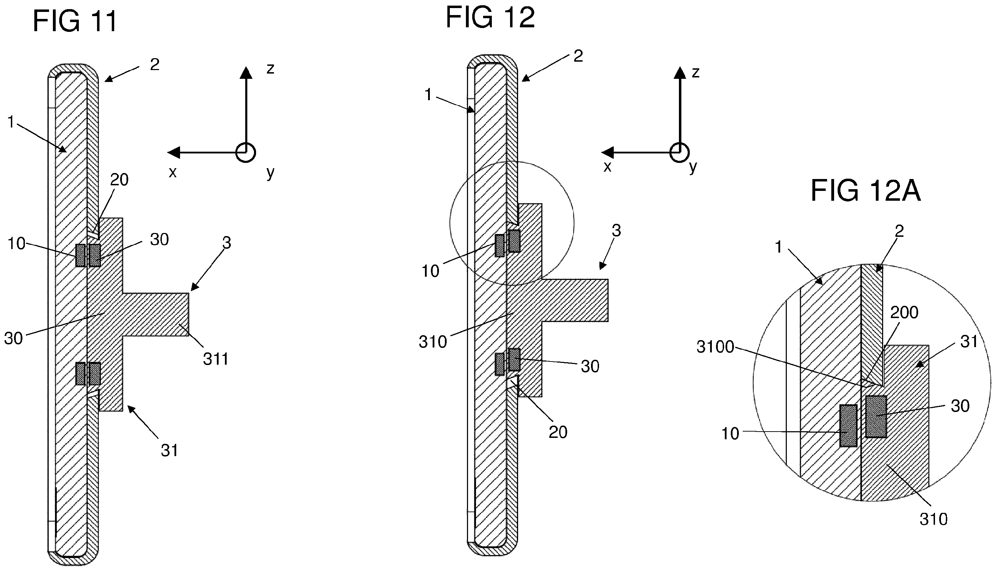

So kann die Durchgangsöffnung 20 beispielsweise mit einem sich nach außen zu dem Halter 3 hin konisch verjüngenden Rand ausgebildet sein, sodass ein Außendurchmesser der Durchgangsöffnung 20 an einer dem Halter 3 zugewandten Außenseite zumindest geringfügig kleiner ist als ein Außendurchmesser der Öffnung 20 an einer dem Mobiltelefon 1 zugewandten Innenseite. Eine die Öffnung 20 berandende innere Mantelfläche verläuft somit in den Schnittdarstellungen der Figuren 10, 11, 12 und 12A geneigt bezüglich der Ansetzrichtung +x. Entsprechend der vergrößerten Darstellung der Figur 12A ist damit an der inneren Mantelfläche der Durchgangsöffnung 20 jeweils eine Fase 200 vorgesehen.

An der äußeren Mantelfläche 310B des Eingriffsabschnitts ist wiederum eine hierzu gegenläufige Kontur mit einer entsprechenden gegenläufigen Fase 3100 vorgesehen. Der größte Außendurchmesser des Eingriffsabschnitts 310 an der Stirnfläche 310A ist vorliegend kleiner bemessen sein als der größte Außendurchmesser der Öffnung 20 an der Innenseite der Hülle 2. Dementsprechend kann der Halter 3 mit seinem Eingriffsabschnitt 310 entlang der Ansetzrichtung +x ohne Kollision mit dem Rand der Öffnung 20 geradlinig an die Hülle 2 gesteckt werden (vgl. die Schnittdarstellung der Figur 11). Hierbei wird das Ansetzen unter Wirkung der magnetischen Anziehung der Magnetanordnungen 10 und 30 unterstützt. Die einander gegenüberliegenden Begrenzungsflächen der Fasen 200 und 3100 überlappen somit einander im bestimmungsgemäß verbundenen Zustand der Haltevorrichtung nicht. Dies ist aber grundsätzlich nicht ausgeschlossen. Durch eine eventuelle Herstellung der Hülle 2 aus einem flexiblen Material kann beispielsweise der Rand der Öffnung 20 beim Anstecken des Eingriffsabschnitts 310 verdrängt werden, um ein solches Hintergreifen zu ermöglichen.

Bei der darstellten Ausführungsvariante der Figuren 7 bis 12A kann der Rand der Öffnung 20 aber zumindest bereichsweise von dem Rand des Eingriffsabschnitts 310 hintergriffen werden, wenn der Halter 3 an die Hülle 2 gesteckt ist und ein Querkraft auf das Mobiltelefon 1, die Hülle 2 oder den Halter 3 wirken, unter deren Wirkung eine zumindest geringfügige Verlagerung des Halters 3 relativ zu der Hülle 2 und dem Mobiltelefon 1 erfolgen würde. So verbleibt bei der dargestellten Ausführungsvariante entsprechend der Schnittdarstellung der Figur 11 umfangsseitig jeweils ein schmaler Spalt zwischen den Mantelflächen der Durchgangsöffnung 20 und des Eingriffsabschnitts 310. Bei etwaigen Querkräften, die in der yz-Ebene senkrecht zur Ansetzrichtung +x wirken und zu einer Relativverlagerung der Hülle 2 und des Halters 3 führen, kann somit eine beabsichtigte Verlagerung zwischen Hülle 2 und Halter 3 aufgetreten. Diese Verlagerung führt dazu, dass zunächst vorhandene Spalt lokal überbrückt wird und die schrägen Flächen der Fasen 200 und 3100 miteinander in Kontakt gebracht werden. In einem Belastungsfall und einem sich damit einstellenden belastenden Zustand wird somit eine mechanische Sicherung zwischen dem Halter 3 und der Hülle 2 bereitgestellt, ohne dass im belastungsfreien Zustand das Trennen des Halters 3 von dem Mobiltelefon 1 und der Hülle 2 für einen Nutzer erschwert würde. Ferner wird unter Wirkung der Magnetanordnungen 10 und 30 der Halter 3 in einem unbelasteten Zustand stets wieder so ausgerichtet, dass die zweite Magnetanordnung des Halters 3 koaxial zu der ersten Magnetanordnung des Mobiltelefons 1 ausgerichtet ist. Damit stellt sich dann auch wieder umfangsseitig der schmale Spalt zwischen dem halterseitigen Eingriffsabschnitt 310 und der hüllenseitigen Öffnung 20 ein, sodass der Halter 3 kollisionsfrei von der Hülle 2 getrennt werden kann, beispielsweise indem der Halter 3 in eine zu der Ansetzrichtung +x entgegengesetzte Raumrichtung -x von dem Mobiltelefon 1 abgezogen wird.

Die Figuren ein 13 bis 18A zeigen in mit den Figuren 7 bis 12A übereinstimmenden Ansichten eine Ausführungsvariante einer vorgeschlagen Haltervorrichtung, bei der die sich hintergreifenden Bereiche an der Durchgangsöffnung 20 und dem Eingriffsabschnitt 310 geometrisch abweichend gestaltet sind. Anstelle schräg bezüglich der Ansetzrichtung +x verlaufender innerer und äußerer Mantelflächen 20A, 310B ist hier an der inneren Mantelfläche 20A der Öffnung 20 der Hülle 2 eine Durchmesservergrößerung im Bereich der Innenseite durch einen umfangsseitig umlaufenden (vorliegend lediglich exemplarisch kreisförmigen) Absatz oder Rücksprung 201 ausgebildet. Hierin kann bei bestimmungsgemäßer Anbringung des Halters 3 an der Hülle 2 ein sich radial nach außen erstreckender und ringförmig umlaufender Bund 3101 des Eingriffsabschnitts 310 eingreifen. Auch hier sind die Innendurchmesser der Öffnung 20 und die Außendurchmesser des Eingriffsabschnitts 310 derart aufeinander abgestimmt, dass der Eingriffsabschnitt 310 des Halters 3 kollisionsfrei entlang der Ansetzrichtung +x in die Öffnung 20 gesteckt werden kann. Kommt es aber aufgrund auftretender Querkräfte zu einer Verlagerung der an dem Mobiltelefon 1 fixierten Hülle 2 und des Halters 3 relativ zueinander in der yz-Ebene, greift zumindest ein Teil des Bundes 3101 in den ringförmig umlaufenden Rücksprung 201 ein, sodass der Bund 3101 zumindest in einem Bereich den inneren Rand der Öffnung 20 hintergreift. Der Halter 3 ist damit zusätzlich gegen ein Abscheren sowie gegen ein Trennen von der Hülle 2 entlang einer Raumrichtung -x entgegengesetzt zu der Ansetzrichtung +x gesichert.

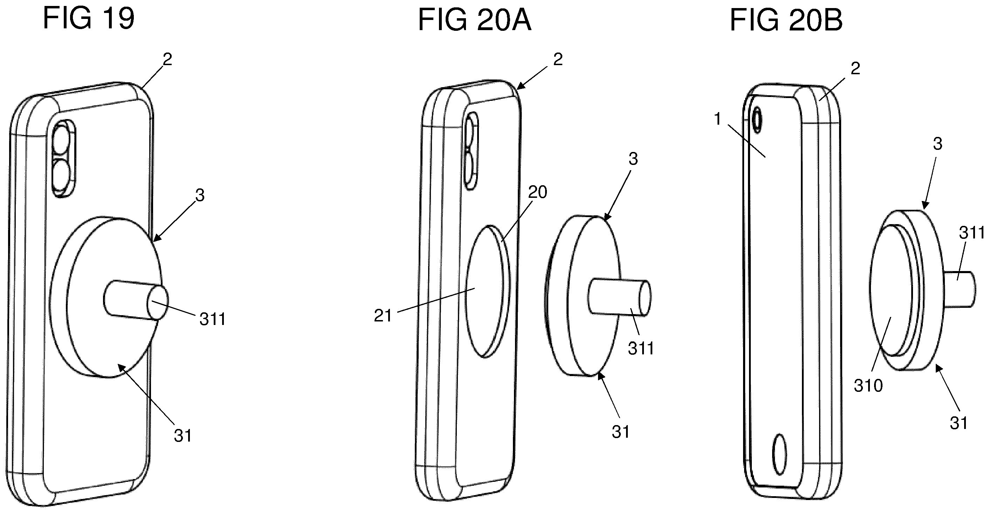

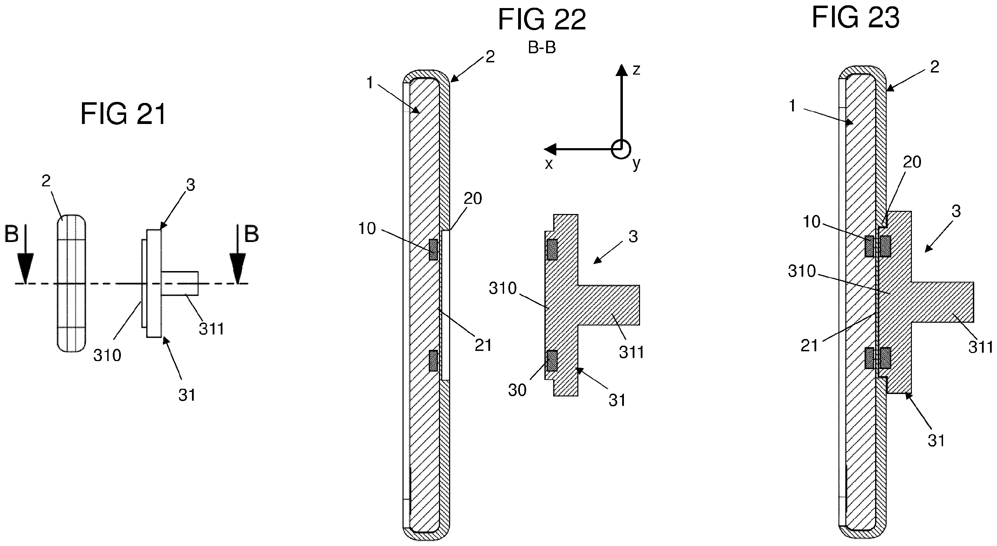

Bei den vorstehend erläuterten Ausführungsvarianten liegt eine Stirnfläche 310A des Halters 3 einer Rückseite des Mobiltelefons 1 unmittelbar gegenüber, wenn der Halter 3 an die Hülle 2 gesteckt wurde. Gegebenenfalls kann die Stirnfläche 310A sogar die Rückseite des Mobiltelefons 1 kontaktieren. Bei der Ausführungsvariante der Figuren 19 bis 23 ist eine Öffnung 20 für den Eingriffsabschnitt 310 des Halters 3 an der Hülle 2 demgegenüber nicht als Durchgangsöffnung ausgeführt. Hier ist vielmehr die Öffnung 20 innenseitig durch einen Dünnwandabschnitt 21 zu dem Mobiltelefon 1 hin verschlossen. Der Dünnwandabschnitt 21 ist durch das Material der Hülle 2 ausgeformt und weist eine Wandstärke auf, die lediglich einen Bruchteil der Wandstärke der an die Öffnung 20 angrenzenden Abschnitte der Rückwand der Hülle beträgt. Durch den Dünnwandabschnitt 21 ist das Mobiltelefon 1 auch im Bereich seiner Magnetanordnung 10 nach außen hin geschützt. Auch der Eingriffsabschnitt 310 kann die Rückseite des Mobiltelefons 1 hierüber nicht unmittelbar kontaktieren. Gleichzeitig ist aber über die geringfügige Wandstärke des Dünnwandabschnitts 21 sichergestellt, dass hierüber eine Energie- und/oder Signalübertragung zwischen dem Halter 3 und dem Mobiltelefon 1 nicht störend beeinträchtigt wird.

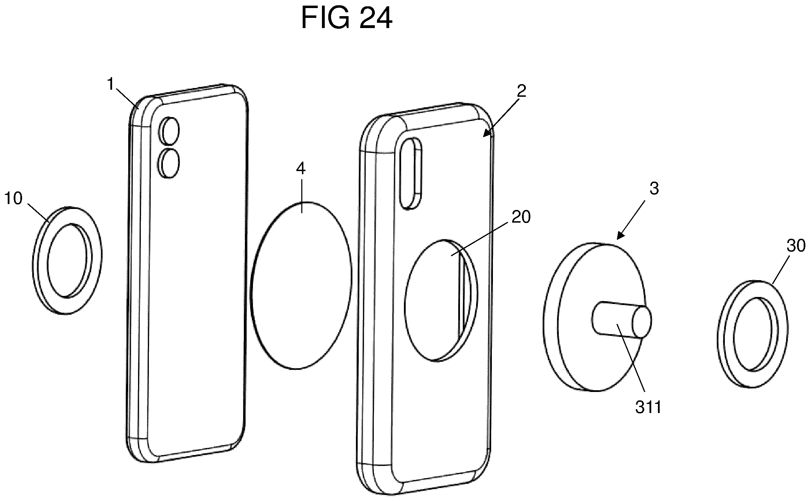

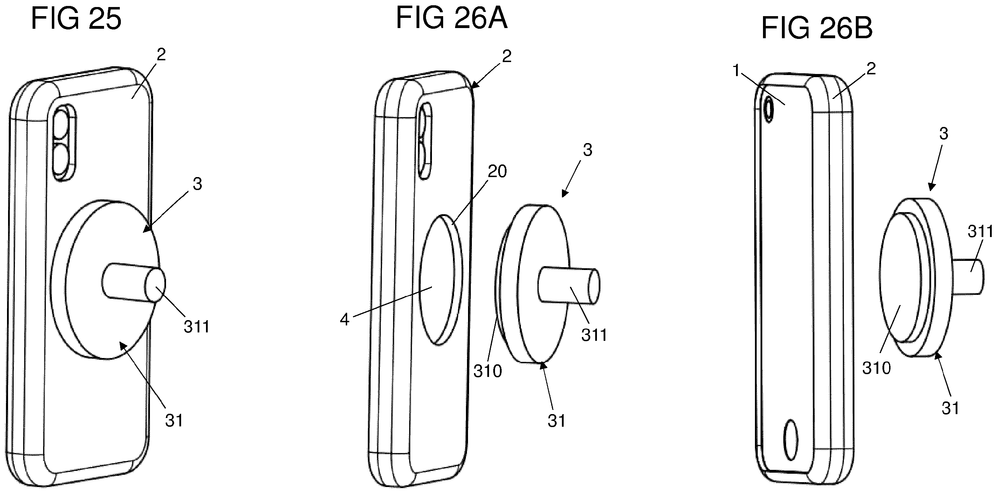

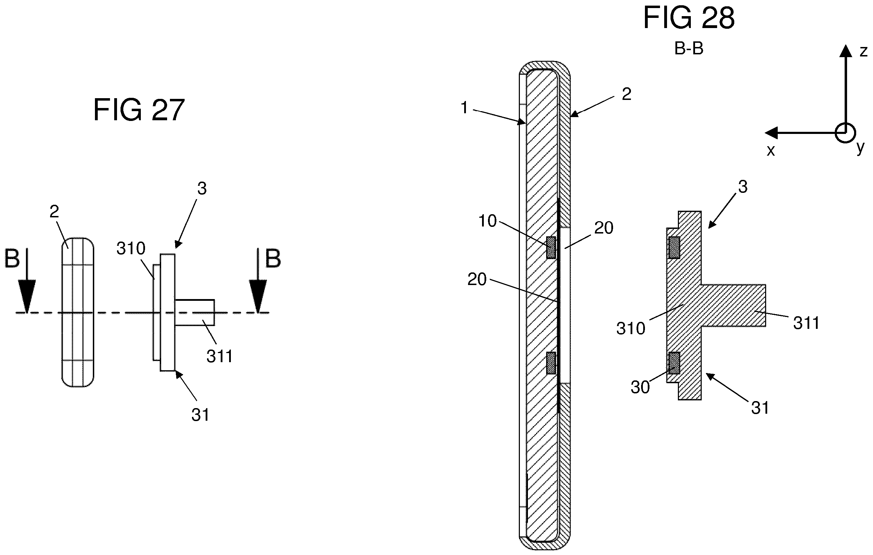

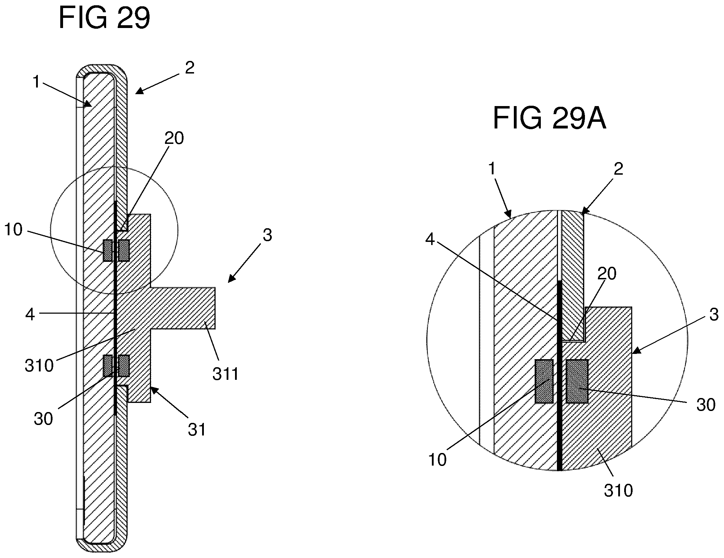

Bei der Ausführungsvariante einer vorgeschlagen Haltervorrichtung der Figuren 24 bis 29A ist vorgesehen, dass die Durchgangsöffnung 20 der Hülle 2 innenseitig durch ein separates Dünnwandelement in Form einer - vorliegend lediglich exemplarisch kreisförmigen - Folie 4 verschlossen ist. Wie insbesondere in den Schnittdarstellungen der Figuren 28, 29 und 29A ersichtlich ist, liegt die Folie 4 zwischen der Stirnfläche 310A des Eingriffsabschnitts 310 und der Rückseite des Mobiltelefons 1 vor, wenn der Halter 3 bestimmungsgemäß an die Hülle 2 gesteckt wurde. Über die Folie 2 lässt sich insbesondere bei nicht an die Hülle 2 gestecktem Halter 3 verhindern, dass die Rückseite des Mobiltelefons 1 im Bereich der Durchgangsöffnung 20 verschmutzt oder beschädigt wird. Gleichzeitig ist die Folie 4 ausreichend dünn, um eine Energie- und/oder Signalübertragung zwischen dem Halter 3 und dem Mobiltelefon 1 nicht störend zu beeinträchtigen. Beispielsweise kann die Folie 4 an die Innenseite der Hülle 2 oder die Rückseite des Mobiltelefons 1 geklebt sein.

In einer möglichen Weiterbildung ist an der Folie, und zwar an ihrer der Durchgangsöffnung 20 und damit dem Halter 3 zugewandten Seite, eine Reibfläche und/oder ein Formschlussbereich für das Zusammenwirken mit dem Halter 3 vorgesehen. Über die Reibfläche und/oder den Formschlussbereich der Folie kann der Halter reib- und/oder formschlüssig mit der Folie 4 verbunden sein, wenn der Halter 3 bestimmungsgemäß an die Hülle 2 gesteckt ist.

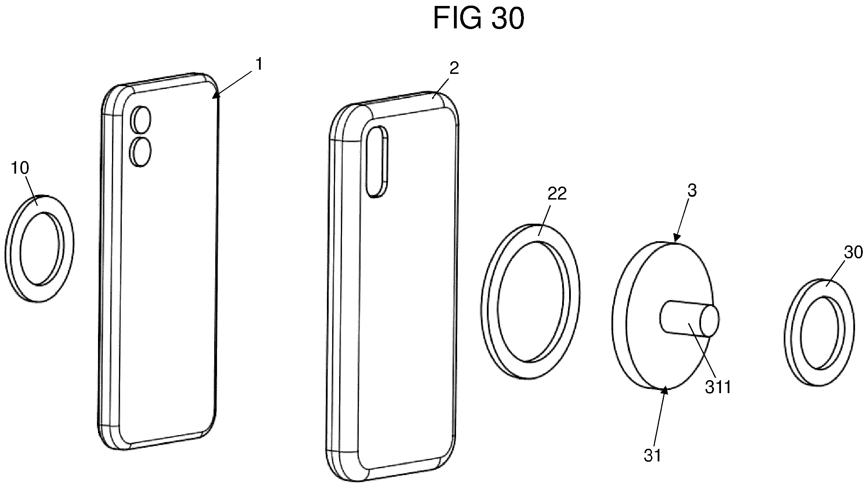

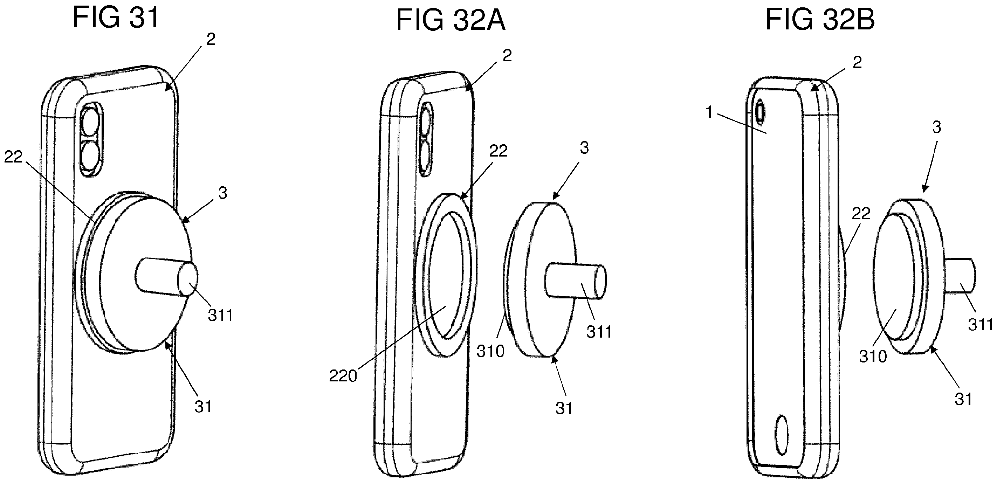

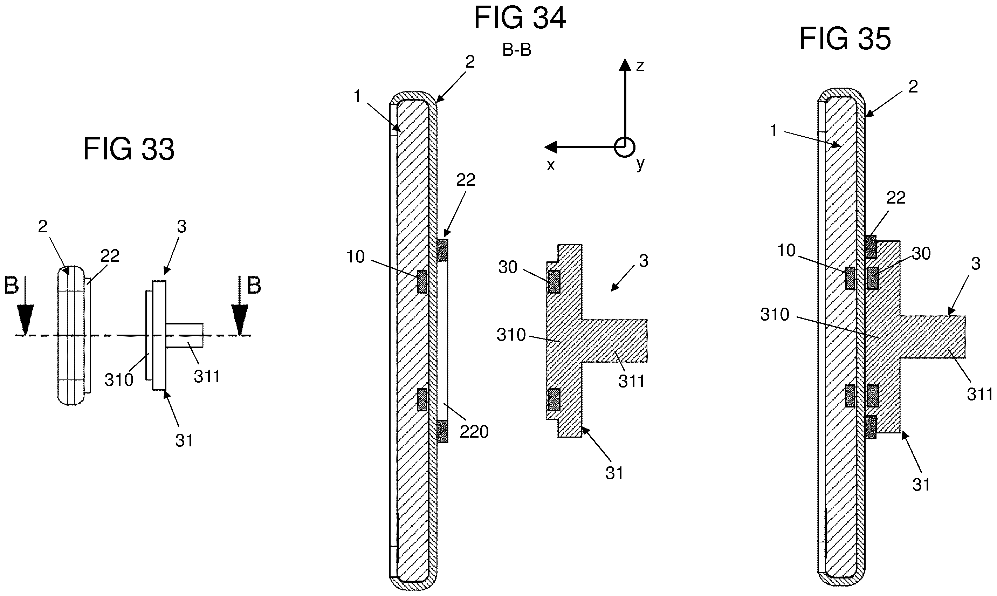

Bei der Ausführungsvariante der Figuren 30 bis 35 ist an der Hülle 2 im Bereich der ersten Magnetanordnung 10 des Mobilteils 1 keine Öffnung vorgesehen. Hier ist vielmehr ein zusätzlicher Sicherungsring 22 als Sicherungselement an der Außenseite der Rückwand der Hülle 2 auf Höhe der ersten Magnetanordnung 10 vorgesehen. Der Sicherungsring 22 kann dabei beispielsweise an die Rückwand der Hülle 2 geklebt sein. Der Sicherungsring 22 definiert eine (Formschluss-) Öffnung 220, in die der Eingriffsabschnitt 310 des Halters 3 eingesteckt und formschlüssig gehalten werden kann. Mit dem Sicherungsring 22 kann somit eine konventionelle Hülle 2 für das Mobiltelefons 1, die keine Öffnung 20 im Bereich der ersten Magnetanordnung 10 des Mobiltelefons aufweist, problemlos nachgerüstet werden, um den Halter 3 nutzen zu können.

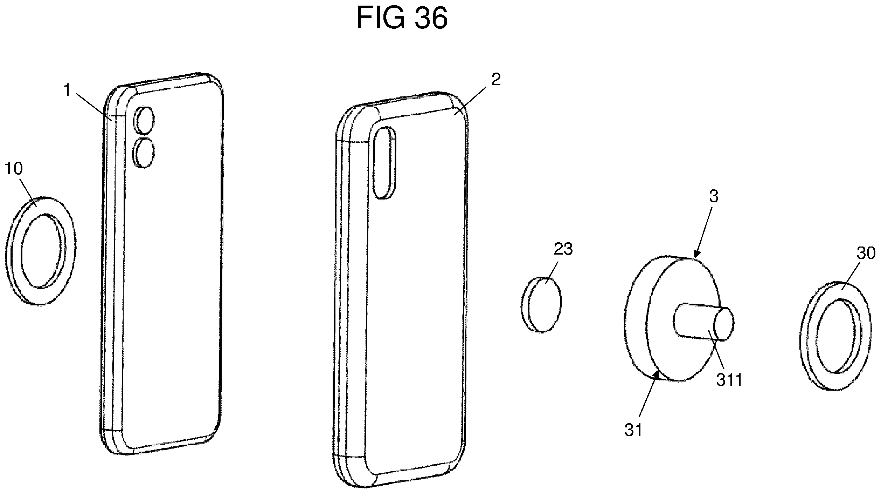

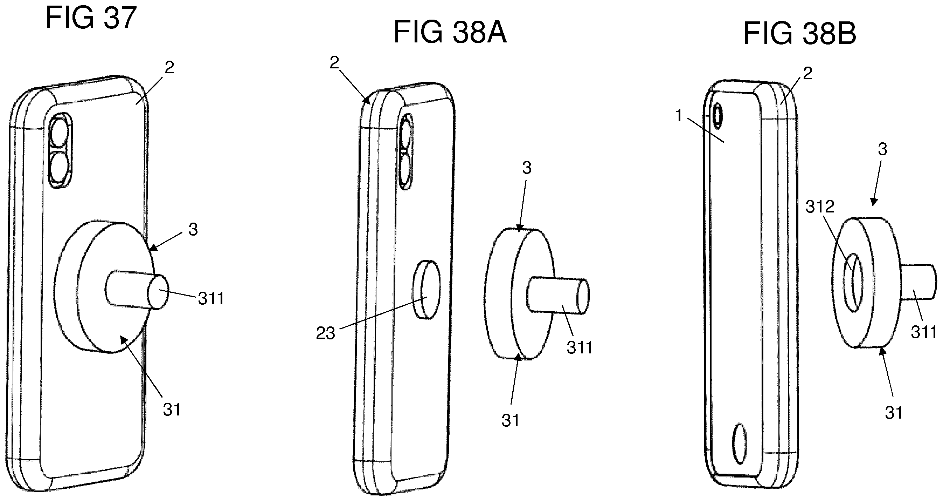

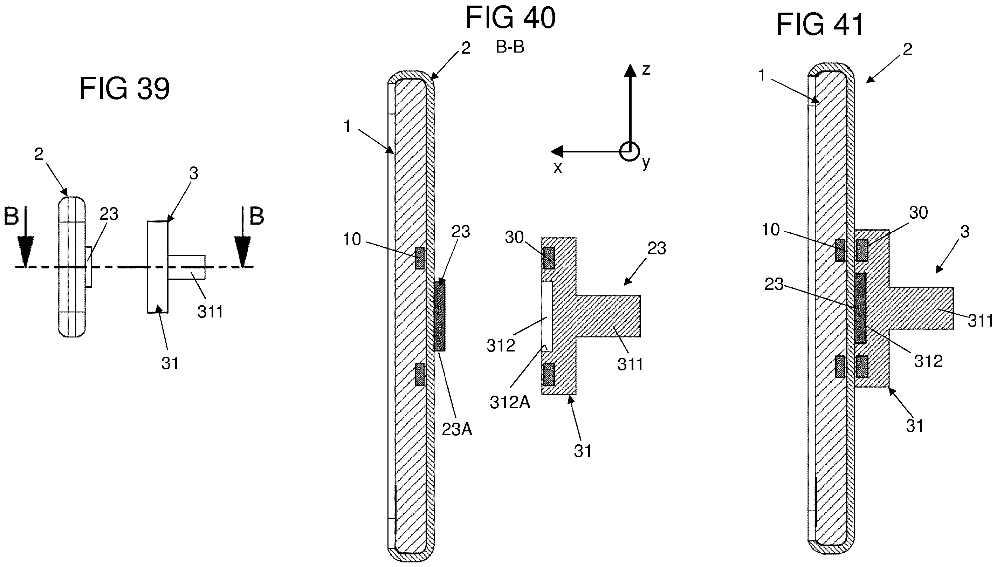

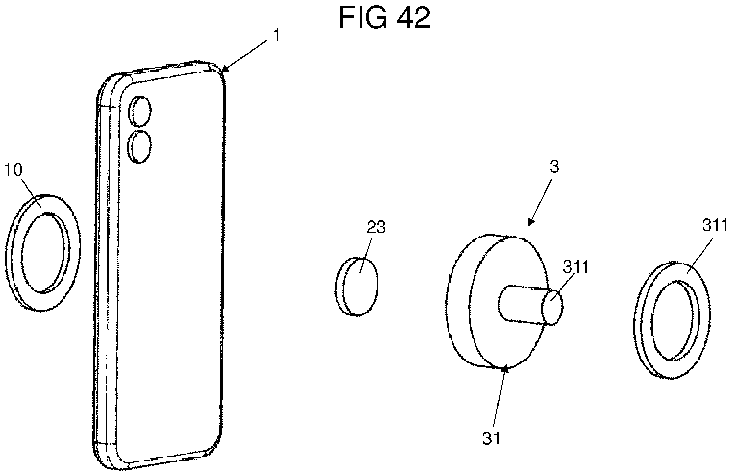

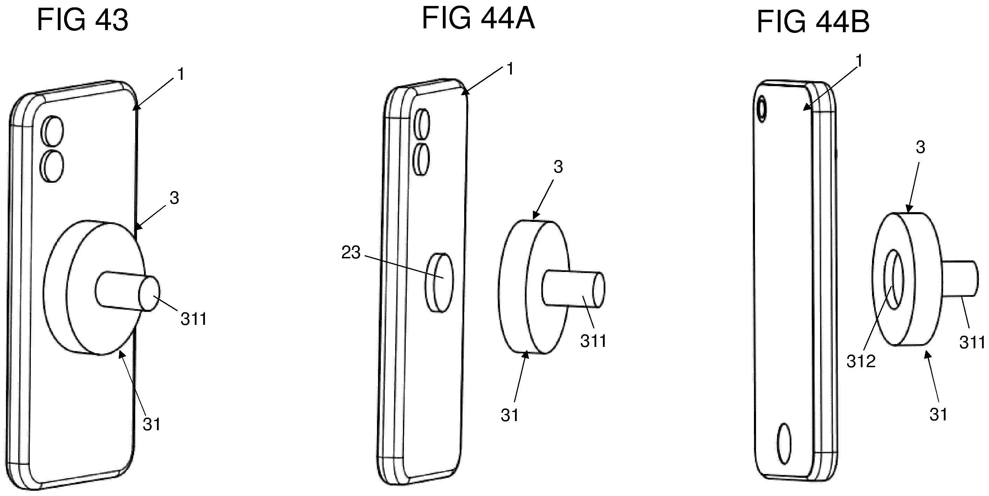

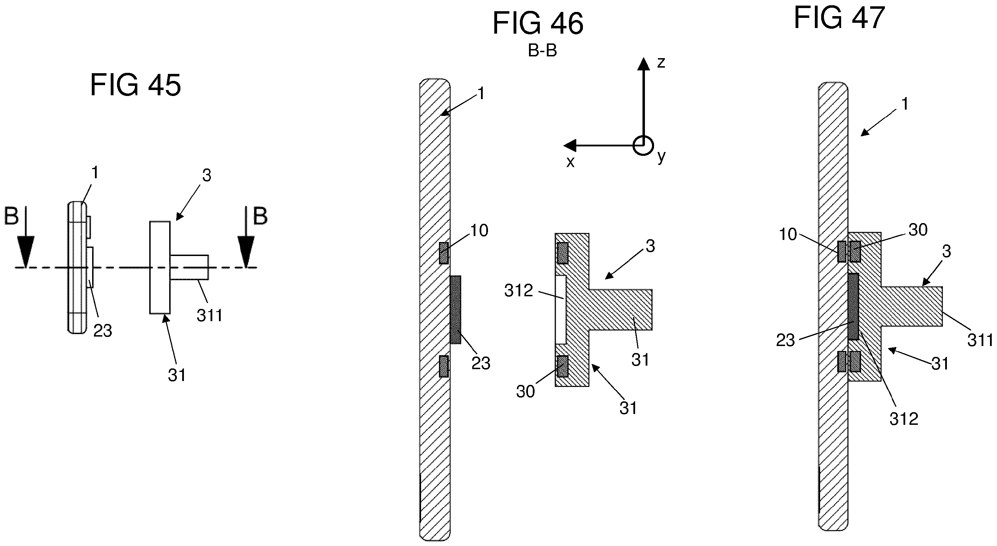

Bei der Ausführungsvariante der Figuren 36 bis 41 ist anstelle eines Sicherungsrings 22 an die Außenseite der Rückwand der Hülle 2 eine Sicherungsscheibe 23 als Sicherungselement angebracht. An der Stirnseite des Halterkörpers 31 ist für die formschlüssige Verbindung mit dieser Sicherungsscheibe 23 kein axial vorstehender Eingriffsabschnitt vorgesehen, sondern eine in ihrer Innenkontur mit der Außenkontur der Sicherungsscheibe 23 korrespondierende Formschlussöffnung 312. Hierüber kann der Halter 31 an die Sicherungsscheibe 23 gesteckt werden, die dann vollständig in der Formschlussöffnung 312 des magnetisch an dem Mobiltelefon 1 gehaltenen Halters 3 aufgenommen ist. Zur zusätzlichen Unterstützung der mechanischen Verbindung zwischen dem Halter 3 und der Sicherungsscheibe 23 kann eine umfangsseitig umlaufende äußere Mantelfläche 23A der Sicherungsscheibe 23 und/oder eine innere Mantelfläche 312A der Formschlussöffnung 312 zumindest teilweise mit einer Reibfläche ausgebildet sein. Gleiches gilt für etwaige axial (entlang der Ansetzrichtung +x) einander zugewandte Stirnflächen der Sicherungsscheibe 23 und der Formschlussöffnung 312. Bei der Ausführungsvariante der Figuren 42 bis 47 ist die Sicherungsscheibe 23 nicht an einer Hülle für das Mobiltelefon 2, sondern unmittelbar an der Rückseite des Mobiltelefons 1 befestigt. Der Sicherungsscheibe 23 kann hier somit wieder ein separates Bauteil sein, das dann aber nicht an einer Hülle 2, sondern an dem Mobiltelefon 1 fixiert wird. An dieser an dem Mobiltelefon 1 fixierten Sicherungsscheibe 23 wird dann der Halter 31 formschlüssig festgelegt, der entlang einer zu der Ansetzrichtung +x parallelen Raumachse magnetisch an dem Mobiltelefon 1 gehalten wird.

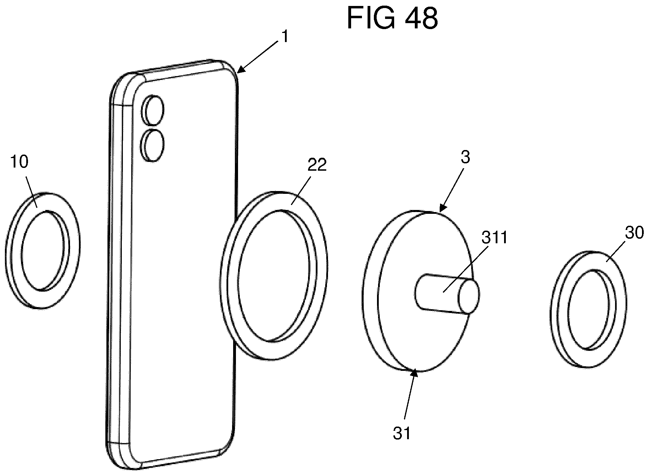

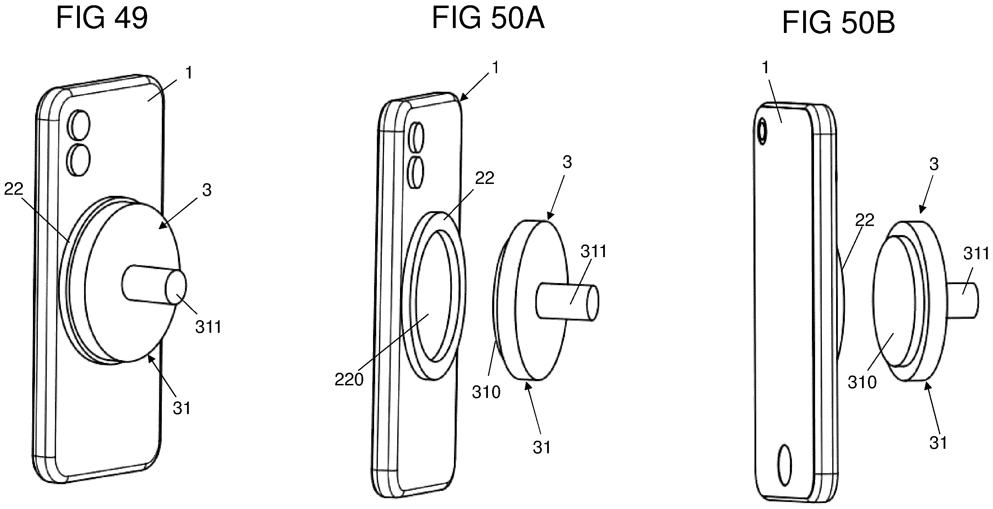

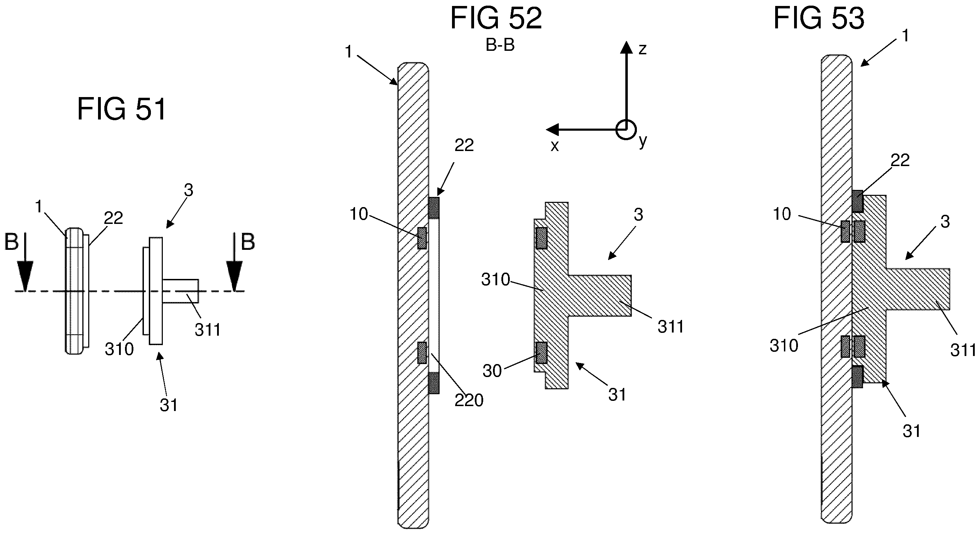

Bei der Ausführungsvariante der Figuren 48 bis 53 ist anstelle der Sicherungsscheibe 23 der Sicherungsring 22 an der Rückseite des Mobiltelefons 1 fixiert, sodass auch hier ohne zusätzliche Hülle 2 eine formschlüssige Kopplung mit dem Halter 3 erfolgen kann.

In einer Weiterbildung der Figuren 42 bis 47 und 48 bis 53 können ein Sicherungsring 22 und eine Sicherungsscheibe 23 auch miteinander kombiniert sein. Die Sicherungsscheibe 23 wäre dann beispielsweise zentriert in dem Sicherungsring 22 angeordnet und ein in den Sicherungsring 22 eingreifender Formschlussabschnitt 310 würde an seiner Stirnseite zusätzlich eine Formschlussöffnung 312 für das Aufstecken auf die Sicherungsscheibe 22 ausbilden. Die Sicherungsscheibe 22 würde hier ein Zusatzelement für eine reib- und/oder formschlüssige Verbindung mit dem Halter 3 bilden, das zusätzlich zu dem als Sicherungsring 22 ausgebildeten Sicherungselement der Haltervorrichtung vorgesehen ist.

Ebenso kann eine Sicherungsscheibe 22 als Zusatzelement an das Mobiltelefon 1 geklebt sein und in die Durchgangsöffnung 20 der Hülle 2 ragen. Der Halter 3 ist dann mit seinem Formschlussabschnitt 310 in die Durchgangsöffnung 20 einsteckbar und weist an dem Formschlussabschnitt 310 eine Formschlussöffnung 312 für die Sicherungsscheibe 22 auf.

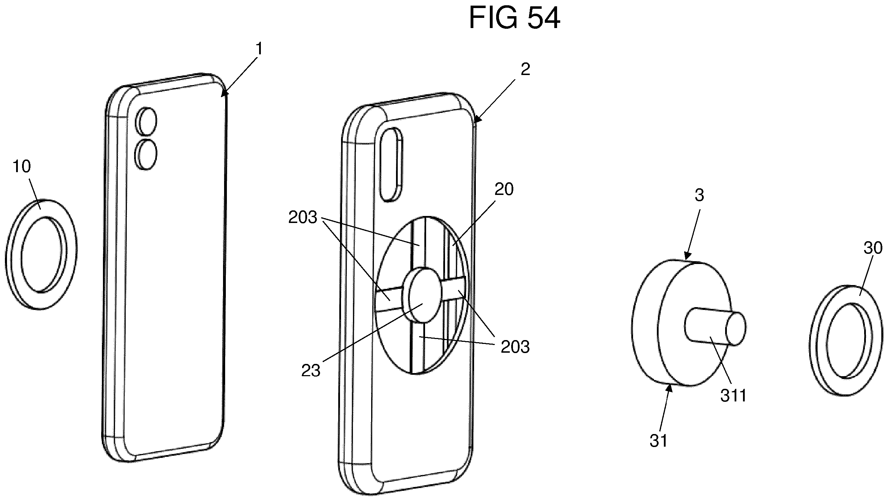

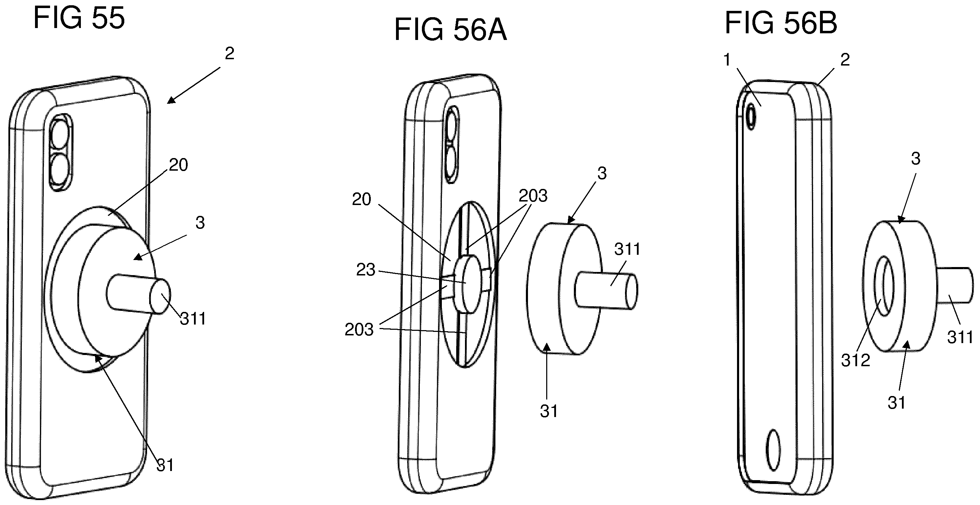

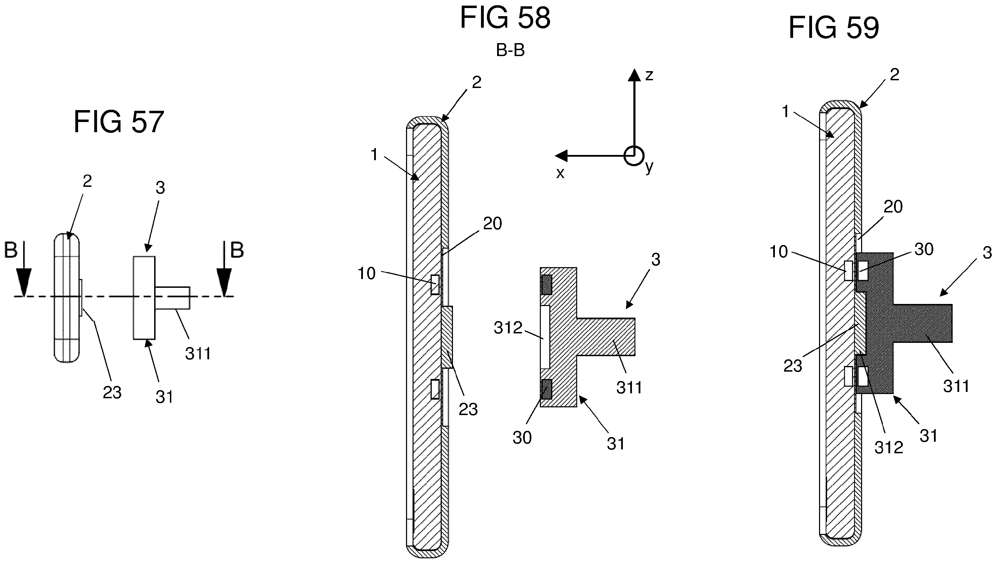

Bei der Ausführungsvariante der Figuren 54 bis 59 ist wiederum eine Sicherungsscheibe 23 als Teil der Hülle 20 vorgesehen, um einen Halter 3 mit der Hülle 2 mechanisch zu verbinden. Die Sicherungsscheibe 23 ist hier jedoch im Unterschied zu der Ausführungsvariante der Figuren 36 bis 21 nicht als separates, an die Außenseite der Rückwand der Hülle 2 fixiertes Bauteil vorgesehen, sondern als an der Rückwand ausgeformter Abschnitt der Hülle 2. Im Bereich der Magnetanordnungen 10 und 30 sind zu der Kreisscheibe 23 radial außen liegende Aussparungen als Teil einer Durchgangsöffnung 20 vorgesehen, die lediglich durch sich radial bezüglich der Ansetzrichtung +x erstreckende (vorliegend beispielsweise vier) Verbindungsstreben 203 voneinander getrennt sind ist. Eine an der Rückwand der Hülle 2 ausgeformte Verbindungsstrebe 203 verbindet jeweils die Sicherungsscheibe 23 mit dem Rand der Durchgangsöffnung 20. Im Bereich der zwischen den Verbindungstreben 203 liegenden Aussparungen ist somit die magnetische Anziehung zwischen den Magnetanordnungen 10, 30 nicht durch dazwischenliegende Abschnitte oder Schichten der Hülle 2 beeinträchtigt.

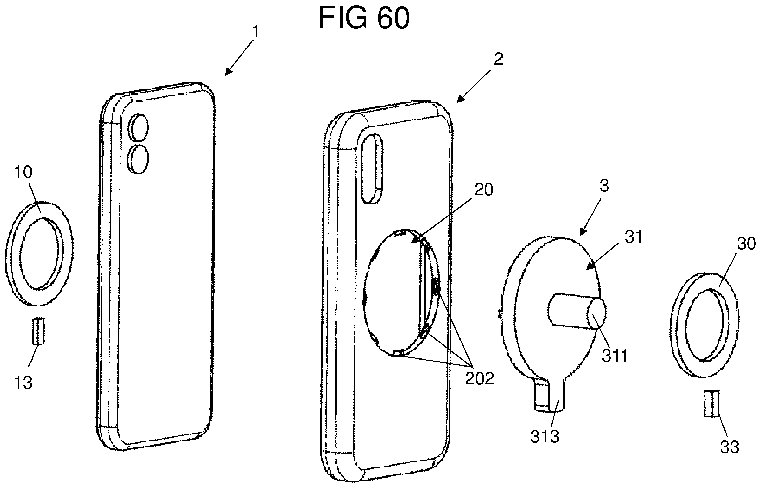

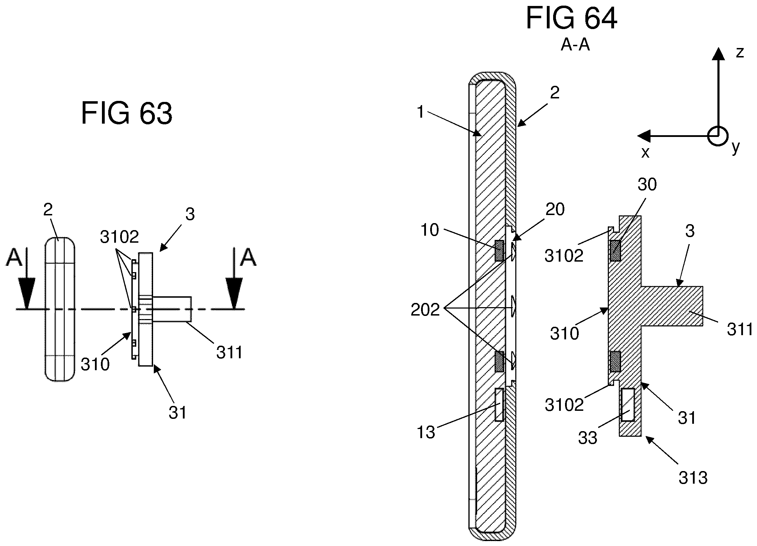

Bei der Ausführungsvariante der Figuren 60 bis 79 ist vorgesehen, dass der Halter 3 und die Hülle 2 erst unter zumindest geringfügigem Schwenken um eine zu der Ansetzrichtung +x parallele Raumachse miteinander bestimmungsgemäß formschlüssig verbunden werden können, nachdem der Halter 3 entlang der Ansetzrichtung +x an die Durchgangsöffnung 20 in der Hülle 2 angesetzt wurde.

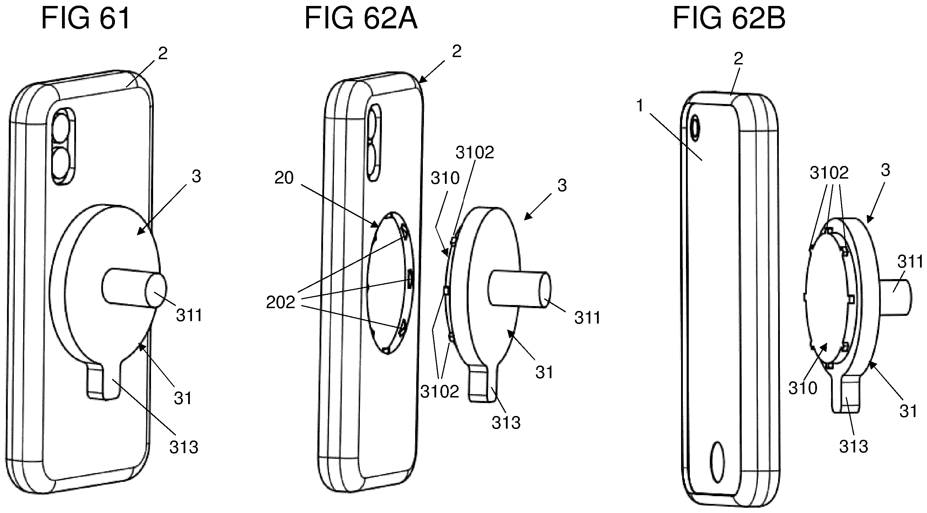

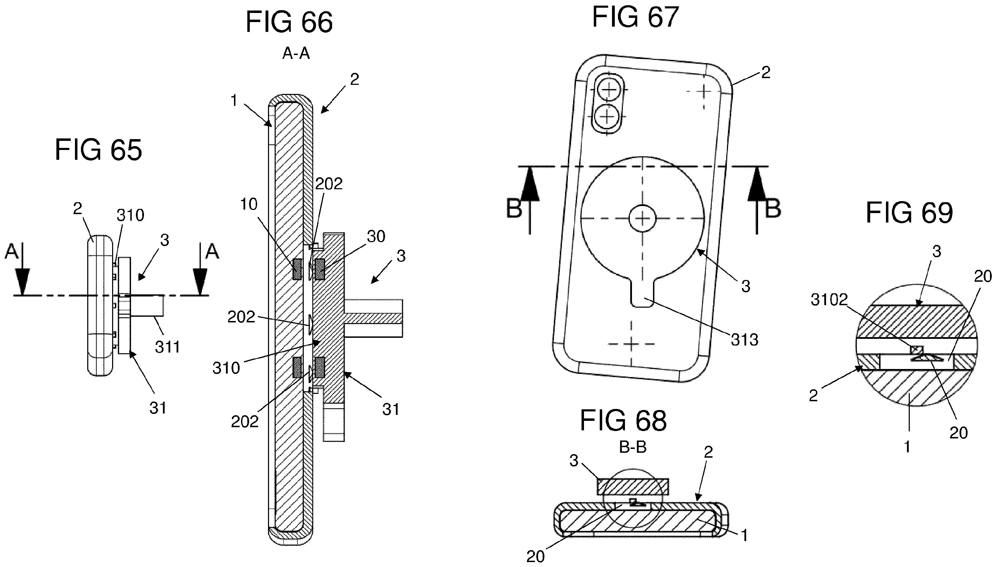

So weist die innere Mantelfläche 20A der Durchgangsöffnung 20 entlang ihres innenseitigen Umfangs zueinander versetzte und jeweils radial nach innen vorstehende Vorsprünge 202 auf. Diese Vorsprünge 202 werden in einer bestimmungsgemäß eingenommenen Formschlussposition des Halters 3 bezüglich der Hülle 2 von an dem Eingriffsabschnitt 310 des Halters 3 vorgesehenen und (bezüglich der Ansetzrichtung +x) radial nach außen vorstehenden Fortsätzen 3102 hintergriffen. Beim Ansetzen des Halters 31 an die Hülle 2 entsprechend den Figuren 62A, 62B, 63 und 64 sowie 65 bis 69 ist der Halter 3 zunächst so zu der Hülle 2 und deren Durchgangsöffnung 20 ausgerichtet, dass die radial nach außen vorstehenden Fortsätze 3102 des Eingriffsabschnitt 310 in axialer Richtung Lücken zwischen den radial nach innen vorstehenden Vorsprüngen 202 der Durchgangsöffnung 20 gegenüberliegen. Unter Wirkung der einander magnetisch anziehenden Magnetanordnungen 10 und 30 kann somit der Eingriffsabschnitt 310 des Halters 3 maximal in die Durchgangsöffnung 20 eintauchen. Vorliegend sind die Vorsprünge 202 an der Durchgangsöffnung 20 entsprechend der vergrößerten Darstellung der Figur 69 jeweils in axialer Richtung angeschrägt. Hierdurch kann beim Ansetzen des Halters 3 an die Hülle 2 ein auf einen Vorsprung 202 treffender Fortsatz 3102 an diesem Vorsprung 202 entlang gleiten und dem Eingriffsabschnitt 310 eine Schwenkbewegung um die zu der Ansetzrichtung +x parallelen Raumachse aufzwingen, sodass ein Fortsatz 3102 jeweils in eine Lücke zwischen zwei Vorsprüngen 20 geführt wird.

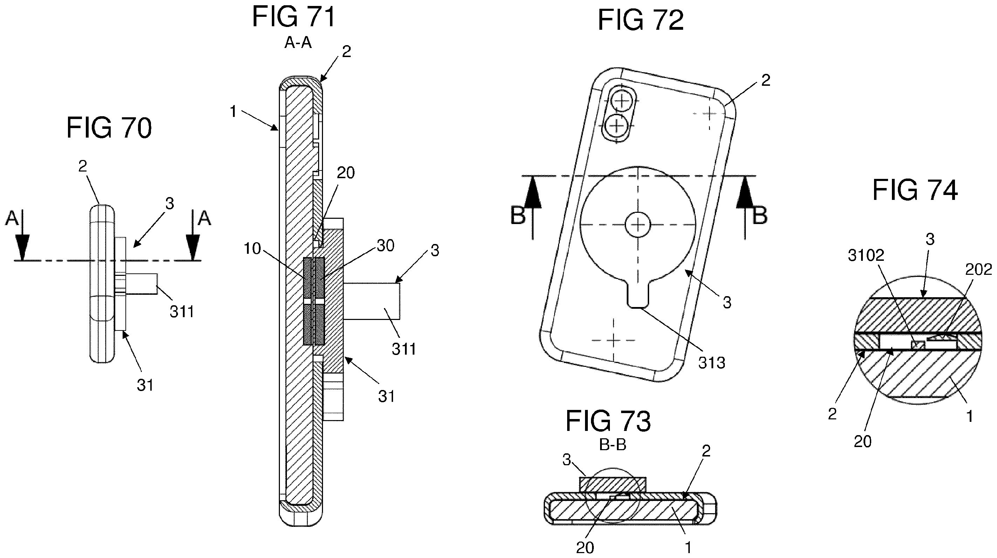

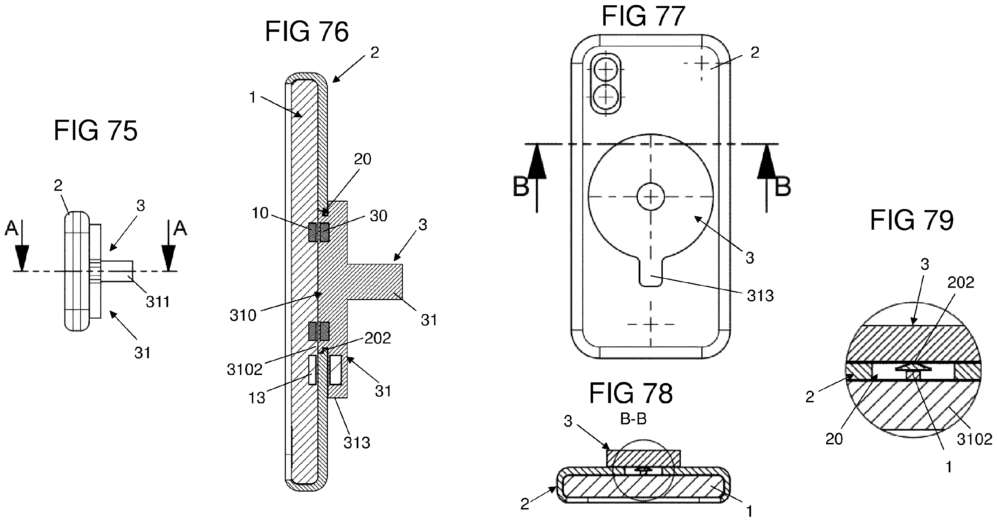

Liegen dann entsprechend den Darstellungen der Figuren 70 bis 74 die halterseitigen Fortsätze 3102 jeweils in einer Lücken zwischen zwei hüllenseitigen Vorsprüngen 202 vor und ist der Halter 3 in axialer Richtung, d. h. in Ansetzrichtung +x, ausreichend weit an das Mobiltelefon 1 angenähert, können die Fortsätze 3102 durch Drehung des Halters 3 und der Hülle 2 relativ zueinander um die zu der Ansetzrichtung +x parallele Raumachse in eine Position verlagert werden, in der ein Fortsatz 3102 jeweils einen Vorsprung 202 hintergreift. Ähnlich zu einem Bajonettverschluss kann somit beispielsweise der Halter 3 nach dem Ansetzen an die Hülle 2 entlang der Ansetzrichtung +x zunächst in einer Ausrichtung bezüglich der Hülle 2 vorliegen und anschließend um die zu Ansetzrichtung +x parallele Raumachse (X-Achse) gedreht werden, um eine Formschlussposition an der Hülle 2 einzunehmen, in der die einzelnen radial nach außen vorstehenden Fortsätze 3102 des Eingriffsabschnitt 310 die radial nach innen vorstehenden Vorsprünge 202 der Durchgangsöffnung 20 hintergreifen. Dieser Zustand ist in verschiedenen Ansichten in den Figuren 75 bis 79 illustriert.

Um die Einnahme der Formschlussposition des Halters 3 an der Hülle 2 zu unterstützen, ist in einem bezüglich der Ansetzrichtung +x radial nach außen vorstehenden Ausrichtungsabschnitt 313 des Halterkörpers 31 wenigstens ein zweites Ausrichtmagnetelement in Form eines zweiten Ausrichtmagneten 33 vorgesehen. Dieser zweite Ausrichtmagnet 33 des Halters 3 wirkt magnetisch mit einem in der Hülle 2 oder - wie dargestellt - in dem Mobiltelefon 1 bereits integrierten ersten Ausrichtmagneten 13 zusammen. Die Ausrichtmagneten 13 und 313 sind dabei jeweils zu der jeweiligen Magnetanordnung 10 oder 30 radial beabstandet. Die ersten und zweiten Ausrichtmagneten 13 und 33 wirken vorliegend derart magnetisch einander anziehend zusammen, dass der Halter 3 unter Wirkung der zwischen den Ausrichtmagneten 13 und 33 wirkenden Magnetkraft bestrebt ist, die in den Figuren 75 bis 79 illustrierte Formschlussposition einzunehmen.

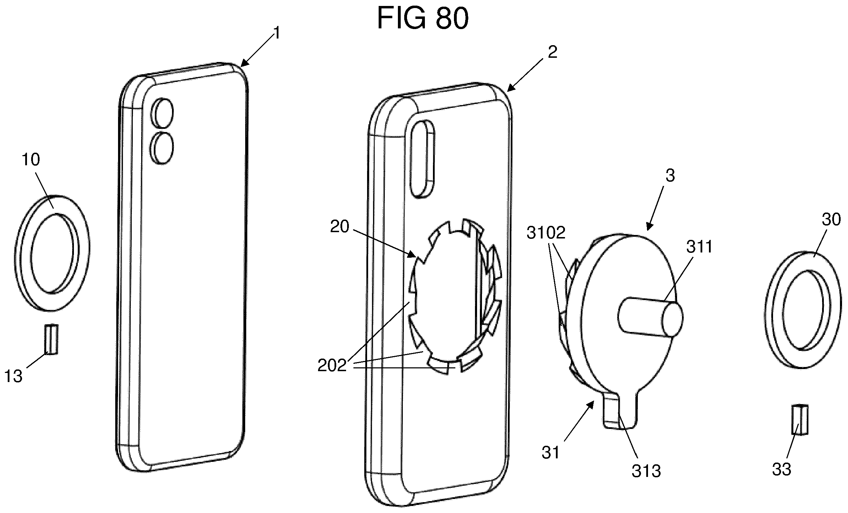

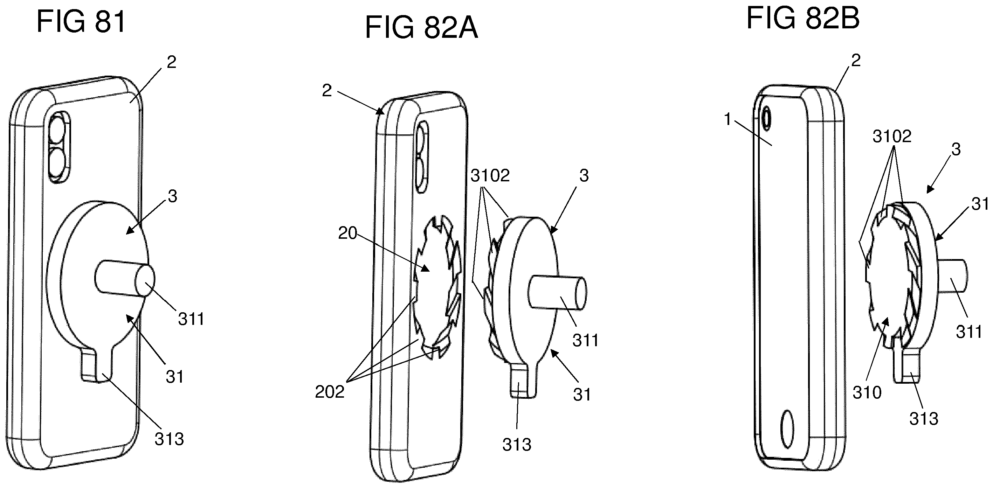

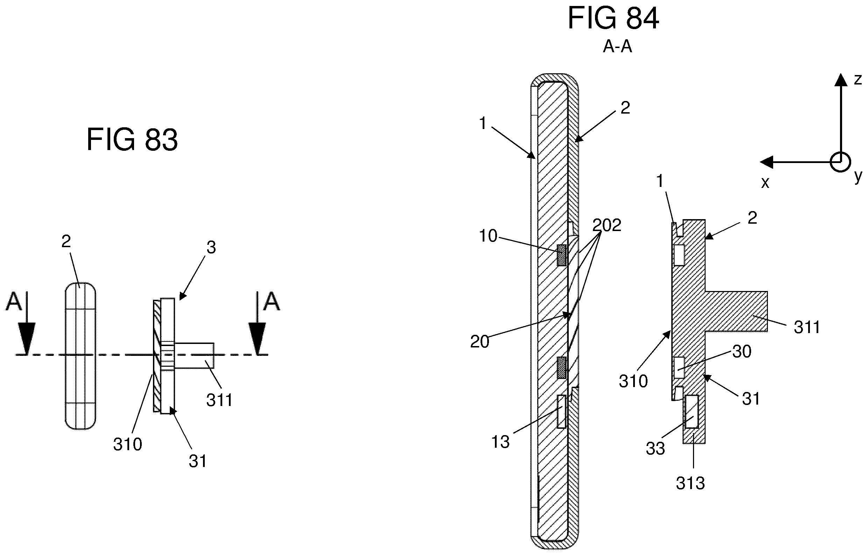

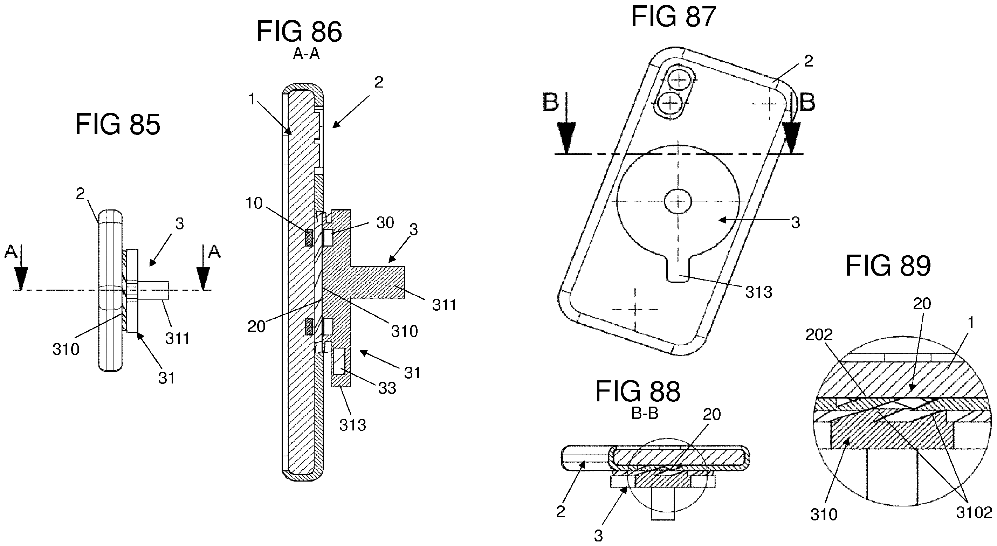

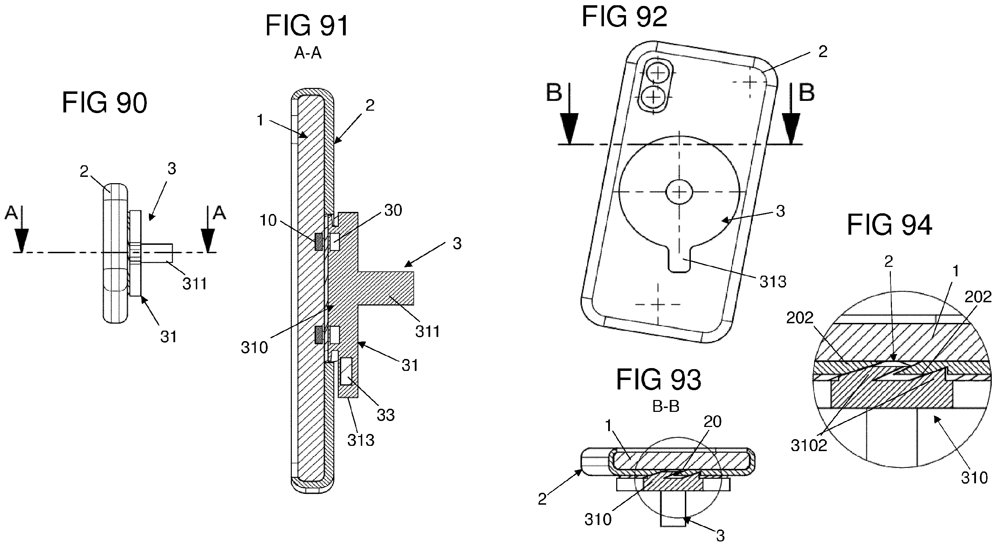

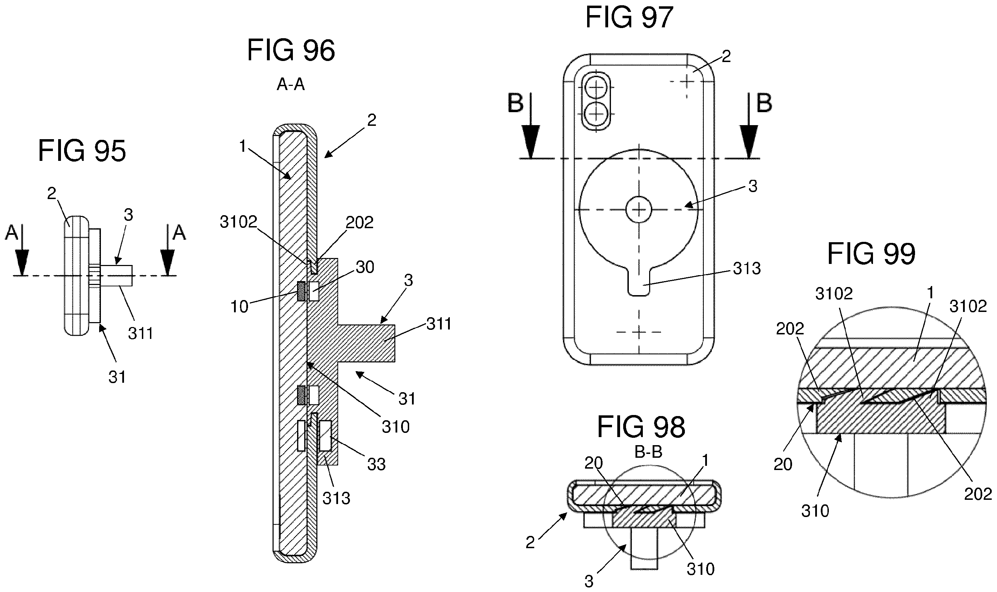

Die Figuren 80 bis 99 veranschaulichen in mit den Figuren 60 bis 79 übereinstimmenden Ansichten eine mögliche Weiterbildung der Haltevorrichtung der Figuren 60 bis 79. Hierbei sind die Vorsprünge 202 an der Durchgangsöffnung 20 der Hülle 2 und die radialen Fortsätze 3102 an dem Eingriffsabschnitt 310 des Halters 3 mit in Umfangsrichtung jeweils geneigt verlaufenden Begrenzungsflächen erweitert. Die Vorsprünge 202 und die Fortsätze 3102 wirken somit nach Art von Gewinde- oder Schraubabschnitten miteinander zusammen und können somit auch bei auftretenden Querkräften reibschlüssig aneinander anliegen, um - zusätzlich zu dem bestehenden Formschluss zwischen dem Eingriffsabschnitt 310 und der Öffnung 20 - einer Verlagerung des Mobiltelefons 1 mit der Hülle 2 bezüglich des Halters 3 entgegenzuwirken.

Die Steigungen der nach Art von Gewinde- oder Schraubabschnitten ausgebildeten Vorsprüngen 202 und Fortsätze 3102 sind vorliegend derart bemessen, dass der zunächst entlang der Ansetzrichtung +x an die Hülle 2 in einer ersten Ausrichtung gesteckte Halter 3 unter Wirkung der magnetischen Anziehung der ersten und zweiten Ausrichtmagnete 13 und 33 an den schräg verlaufenden Begrenzungsflächen entlang gleiten kann und hierüber um die zu der Ansetzrichtung +x parallele Raumachse in die Formschlussposition gedreht wird. In dieser Formschlussposition liegt der Halter 3 dann in einer zweiten Ausrichtung bezüglich der Hülle 2 vor und die Fortsätze 3102 des Eingriffsabschnitt 310 hintergreifen jeweils die Vorsprünge 202 der Durchgangsöffnung 20.

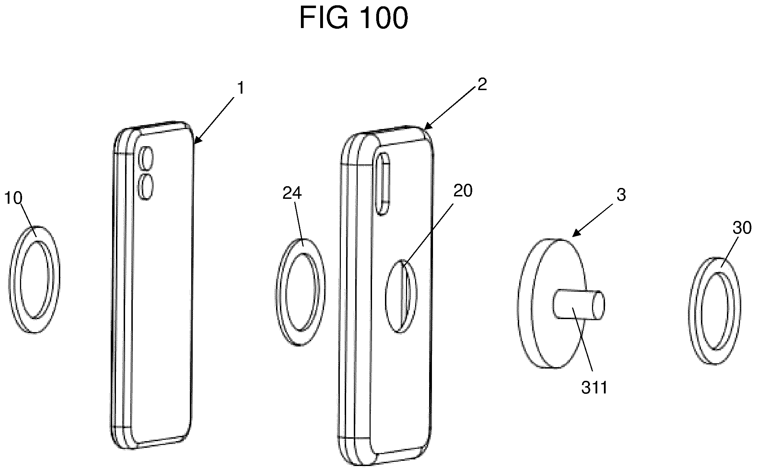

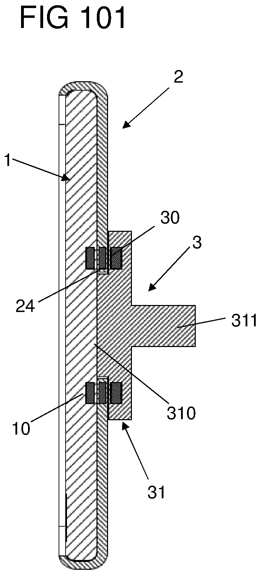

Bei der Ausführungsvariante der Figuren 100 und 101 ist in der Hülle 2 eine dritte Magnetanordnung 24 vorgesehen. Die dritte Magnetanordnung 24 der Hülle 2 ist vorliegend mit der ersten Magnetordnung 10 des Mobiltelefons 1 korrespondierend, ringförmig ausgebildet. Die dritte Magnetanordnung 24 der Hülle 2 wirkt mit der ersten Magnetanordnung 10 des Mobiltelefons 1 anziehend zusammen und ist vorgesehen, ein Magnetfeld der ersten Magnetanordnung 10 zu verstärken und/oder räumlich auszudehnen, sodass der Halter 30 mit seiner zweiten Magnetanordnung 30 über die dritte Magnetanordnung 24 hinweg magnetisch an dem Mobiltelefon 1 gehalten werden kann. Die Ausrichtung der Pole der dritten Magnetanordnung 24 der Hülle 2 stimmt hier folglich bezüglich der Ansetzrichtung +x - in dem mit dem Mobiltelefon 1 verbundenen Zustand der Hülle 2 - mit der Ausrichtung der Pole der ersten Magnetanordnung 100 überein.

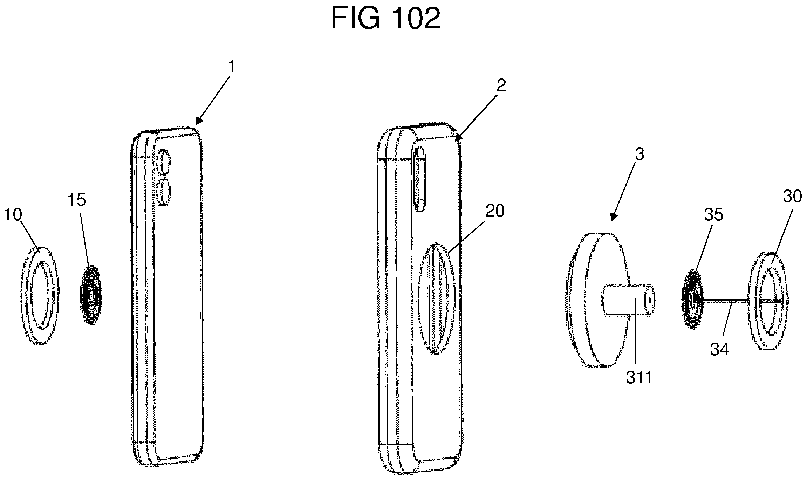

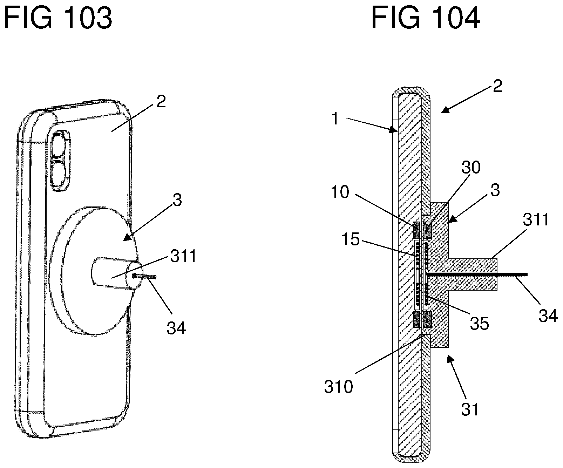

Die Figuren 102, 103 und 104 illustrieren in Anlehnung an die Ausführungsvariante der Figuren 1 bis 6 die Anordnung von Induktionsspulen 15 und 35 in dem Mobiltelefon einerseits und dem Halter 3 andererseits, um den Halter 3 - wie bereits vorstehend erläutert - für ein induktives Laden und/oder eine drahtlose Übertragung von Signalen nutzen zu können.

Die Induktionsspule 15 des Mobiltelefons 1 ist koaxial zu der ersten Magnetanordnung 10 angeordnet und innerhalb der ringförmigen ersten Magnetanordnung 10 positioniert. Die Induktionsspule 35 des Halters 3 ist wiederum im Eingriffsabschnitt 310 des Halters 3 untergebracht (vgl. insbesondere die Schnittdarstellung der Figur 140) und koaxial zu und innerhalb der zweiten ringförmigen Magnetanordnung 30 angeordnet. Zur Ansteuerung der halterseitigen Induktionsspule 35 und deren Versorgung mit elektrischer Energie ist eine Leitung 34 vorgesehen. Diese Leitung 34 kann Teil eines Kabels sein, das bei der Ausführungsvariante der Figuren 102, 103 und 104 exemplarisch parallel zur Ansetzrichtung +x aus dem Endstück 310 herausgeführt ist. Alternativ kann die Leitung beispielsweise mit dem Anschluss 32A verbunden sein.

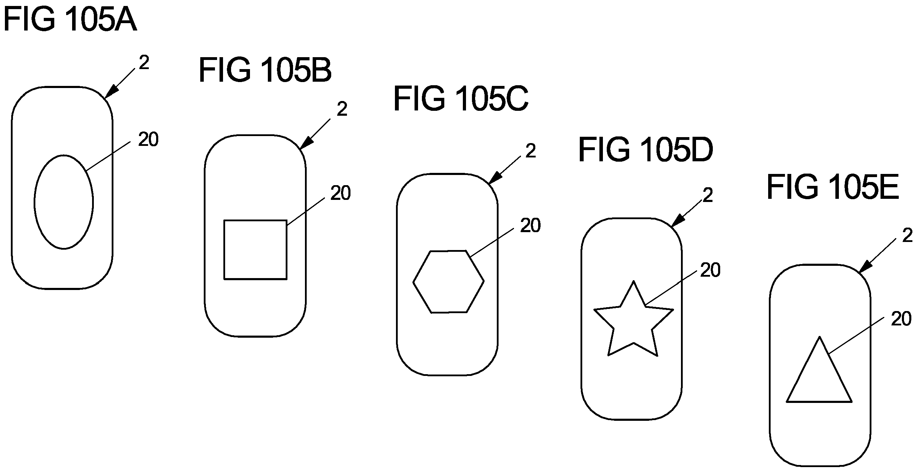

Die Figuren 105A bis 105L veranschaulichen exemplarisch weitere geometrische Gestaltungsmöglichkeiten für eine Öffnung 20 an der Hülle 2. Grundsätzlich kann die jeweilige hier dargestellte Öffnung 20 auch mit einem Dünnwandabschnitt und mithin als Aussparung an der Rückseite der Hülle 2 oder als Durchgangsöffnung ausgebildet sein.

Die Figuren 105A bis 105E zeigen die einzelne Öffnung 20 an der Hülle 2 mit unterschiedlichen geometrischen Formen, zum Beispiel anstelle einer Kreisform mit einer Ellipsenform (Figur 105A), mit der Form eines regelmäßigen Vierecks, insbesondere eines Quadrats (Figur 105B), als regelmäßiges Sechseck [Figur 105C), mit Sternform (Figur 105D) oder mit Dreiecksform (Figur 105E). Eine Abweichung von der Kreisform kann hierbei insbesondere den Vorteil bieten, dass der Halter 3 mit einem korrespondierend gestalteten Eingriffsabschnitt 310 lediglich in einer begrenzten Anzahl von Ausrichtungen, gegebenenfalls auch nur genau einer Ausrichtung in die jeweilige Öffnung 20 eingreifen kann.

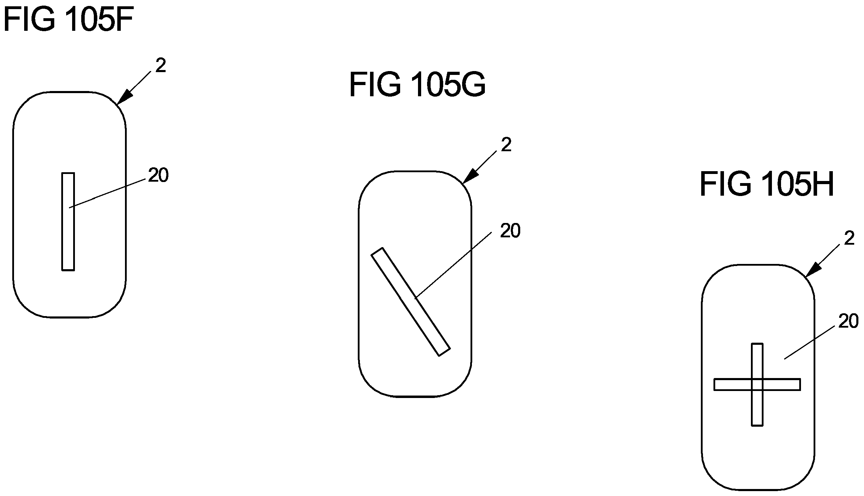

Dies ist im Grundsatz auch bei den Öffnungen 20 der Ausführungsvarianten der Figuren 105F, 105G und 105H der Fall. Hier ist die Öffnung 20 nach Art eines schmalen Rechtecks (Figuren 105F und 105G) oder eines Kreuzes (Figur 105H) ausgebildet.

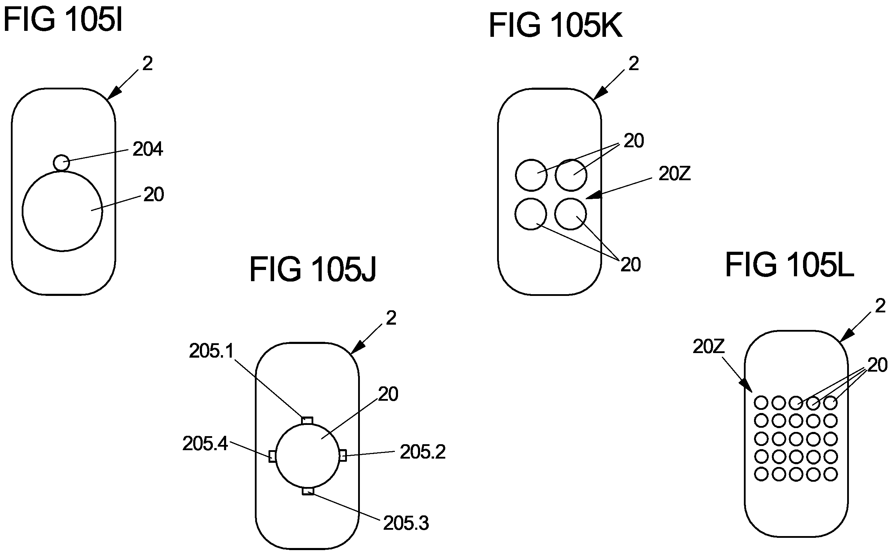

Bei der Ausführungsvariante der Figur 105I ist zusätzlich zu der Öffnung 20 eine - hier exemplarische kleiner dimensionierte - Zusatzöffnung 204 an der Hülle 2 vorgesehen. In diese Zusatzöffnung 204 kann beispielsweise ein Zapfen oder Stift des Halters 3, der an dem Eingriffsabschnitt 310 vorgesehen ist, eingreifen, wenn der Halter 3 in einer bestimmten Ausrichtung an die Hülle 2 angesetzt wird.

Bei der Ausführungsvariante der Figur 105J weist die Öffnung 20 zusätzlich äquidistant am Umfang verteilte Taschen 205.1-205.4 für den zusätzlichen Eingriff radial bezüglich der Ansetzrichtung +x an dem Eingriffsabschnitt 310 vorstehender Bereiche auf.

Bei den Ausführungsvarianten der Figuren 105K und 105L sind Öffnungsanordnungen 20Z mit einer Mehrzahl von Öffnungen 20 vorgesehen. Die Öffnungen 20 sind hierbei in einem Muster, insbesondere einem regelmäßigen Muster angeordnet. Ein einzelner Eingriffsabschnitt 310 des Halters 3 kann hierbei dann beispielsweise mehrere lokal vorspringende Fortsätze für den Eingriff in die Mehrzahl von Öffnungen 20 umfassen, um den Halter 3 an eine Öffnungsanordnung 20Z anzustecken.

Der der vorgeschlagenen Lösung zugrunde liegende Gedanke ist nicht auf die vorangehend geschilderten Ausführungsbeispiele beschränkt, sondern lässt sich auch in gänzlich andersgearteter Weise verwirklichen. Insbesondere ist das dargestellte Mobiltelefon 1 lediglich ein Beispiel für ein Elektrogerät, für das eine vorgeschlagene Haltervorrichtung nutzbar ist.

### Bezugszeichenliste

- 1: Mobiltelefon (Elektrogerät)
- 10: Erste Magnetanordnung
- 13: Erster Ausrichtmagnet
- 15: Induktionsspule
- 2: Hülle (Sicherungselement)
- 20: Öffnung
- 20A: Innenfläche / innere Mantelfläche
- 20Z: Öffnungsanordnung
- 200: Fase
- 201: Rücksprung
- 202: Vorsprung
- 203: Verbindungsstrebe
- 204: Zusatzöffnung
- 205.1-205.4: Tasche
- 21: Dünnwandabschnitt
- 22: Sicherungsring (Sicherungselement)
- 220: Öffnung
- 23: Sicherungsscheibe (Sicherungselement)
- 23A: Außenfläche / äußere Mantelfläche
- 24: Dritte Magnetanordnung
- 3: Halter
- 30: Zweite Magnetanordnung
- 31: Halterkörper
- 31R: Randabschnitt
- 310: Eingriffsabschnitt (Formschlussabschnitt)
- 310A: Stirnfläche
- 310B: Außenfläche / äußere Mantelfläche
- 310.1: Übergangsbereich
- 3100: Fase / Schräge
- 3101: Bund
- 3102: Fortsatz
- 311: Endstück / Verbindungselement
- 312: Formschlussöffnung (Formschlussabschnitt)
- 312A: Innenfläche / innere Mantelfläche
- 313: Ausrichtungsabschnitt
- 32A: Anschluss
- 32B: Elektronik
- 33: Zweiter Ausrichtmagnet
- 34: Leitung
- 35: Induktionsspule
- 4: Folie (Dünnwandelement)
- x, y, z: Raumrichtung

## Patentansprüche

1. Haltevorrichtung für ein eine erste Magnetanordnung (10) aufweisendes Elektrogerät (1), mit
- einem Sicherungselement (2, 22, 23) zur Fixierung an dem Elektrogerät (1) und
- einem Halter (3) zur Verbindung mit dem Sicherungselement (2, 22, 23), **dadurch gekennzeichnet, dass**
- der Halter (3) eine **Fehler! Textmarke nicht definiert.**Magnetanordnung (30) umfasst, die vorgesehen ist, magnetisch anziehend mit der ersten Magnetanordnung (10) des Elektrogeräts (1) zusammenzuwirken, um den Halter (3) entlang einer Ansetzrichtung (+x) an dem Elektrogerät (1) zu halten, und
- der Halter (3) einen Formschlussabschnitt (310, 312) umfasst, der vorgesehen ist, zusammen mit dem an dem Elektrogerät (1) fixierten Sicherungselement (2, 22, 23) einer Verlagerung des Sicherungselements (2, 22, 23) relativ zu dem Halter (3) quer zur Ansetzrichtung (+x) entgegenzuwirken.

2. Haltevorrichtung nach Anspruch 1, **dadurch gekennzeichnet, dass**
- der Formschlussabschnitt für einen spielbehafteten oder spielfreien Formschluss mit dem an dem Elektrogerät (1) fixierten Sicherungselement (2, 22, 23) vorgesehen ist, über den einer Verlagerung des Sicherungselements (2, 22, 23) relativ zu dem Halter (3) quer zur Ansetzrichtung (+x) entgegengewirkt wird, und/oder
- der Formschlussabschnitt (310, 312), bei mit dem Sicherungselement (2, 22, 23) verbundenen Halter (3),einer Verlagerung des Sicherungselements (2, 22, 23) relativ zu dem Halter (3) wenigstens entlang zweier zueinander senkrechter und jeweils quer zu Ansetzrichtung (+x) verlaufender Raumrichtungen (±y, ±z) entgegengewirkt.

3. Haltevorrichtung nach Anspruch 1 oder 2, **dadurch gekennzeichnet, dass** das Sicherungselement (2, 22, 23) einen Formschlussbereich für den Formschlussabschnitt (310, 312) des Halters (3) aufweist und bei an den Formschlussbereich bestimmungsgemäß angebrachtem Formschlussabschnitt (310, 312) des Halters (3) der Halter (3) und das Sicherungselement (2, 22, 23) formschlüssig miteinander verbunden sind und eine Verlagerung des Sicherungselements (2, 22, 23) relativ zu dem Halter (3) quer zur Ansetzrichtung (+x) vollständig blockiert oder zumindest auf ein toleriertes Maß begrenzt wird.

4. Haltevorrichtung nach einem der vorhergehenden Ansprüche, **dadurch gekennzeichnet, dass** der Halter (3) nur für eine mechanische Verbindung mit dem Sicherungselement (2, 22, 23), nicht aber für eine mechanische Verbindung mit dem Elektrogerät (1) vorgesehen ist und/oder das an dem Elektrogerät (1) zu fixierende und für die Verbindung mit dem Halter (3) vorgesehene Sicherungselement (2, 22, 23) magnetfrei ist.

5. Haltevorrichtung nach einem der Ansprüche 1 bis 3, **dadurch gekennzeichnet, dass** das an dem Elektrogerät (1) zu fixierende und für die Verbindung mit dem Halter (3) vorgesehene Sicherungselement (2, 22, 23) eine dritte Magnetanordnung (24) umfasst, die vorgesehen ist, ein Magnetfeld der ersten Magnetanordnung (10) zu verstärken und/oder räumlich auszudehnen.

6. Haltevorrichtung nach einem der vorhergehenden Ansprüche, **dadurch gekennzeichnet, dass** an dem Formschlussabschnitt (310) des Halters (3) wenigstens ein Bereich (3100, 3101, 3102) ausgebildet ist, der für ein zumindest teilweises Hintergreifen wenigstens eines Bereichs (200, 201, 202) an dem Sicherungselements (2) vorgesehen ist.

7. Haltevorrichtung nach Anspruch 6, **dadurch gekennzeichnet, dass**
- der wenigstens eine zu hintergreifende Bereich (200, 201) des Sicherungselements (2) zumindest teilweise flexibel ist und/oder der wenigstens eine für das Hintergreifen vorgesehene Bereich (3100, 3101, 3102) des Halters (3) an dem Formschlussabschnitt (310), bezogen auf die Ansetzrichtung (+x), radial vorstehend ausgebildet ist und/oder
- der Formschlussabschnitt (310) des Halters (3) und das Sicherungselement (2) miteinander formschlüssig verbindbar sind, indem der Formschlussabschnitt (310) in einer ersten Ausrichtung bezüglich des Sicherungselements (2) entlang der Ansetzrichtung (+x) an das Sicherungselement (2) angesetzt und dann um eine zu der Ansetzrichtung (+x) parallele Raumachse relativ zu dem Sicherungselement (2) gedreht wird, damit der Formschlussabschnitt (310) in einer zu ersten Ausrichtung verschiedener zweiten Ausrichtung bezüglich des Sicherungselements (2) mit seinem wenigstens einen Bereich (3102) den wenigstens einen Bereich (202) des Sicherungselements (2) hintergreift und der Formschlussabschnitt (310) mit dem Sicherungselement (2) formschlüssig verbunden ist.

8. Haltevorrichtung nach Anspruch 7, **dadurch gekennzeichnet, dass** der Halter (3) wenigstens ein zu der zweiten Magnetanordnung (30) beabstandetes zweites Ausrichtmagnetelement (33) aufweist, das vorgesehen ist, unter Zusammenwirken mit wenigstens einem ersten Ausrichtmagnetelement (13) des Elektrogeräts (1) die Verlagerung des an das Sicherungselement (2) angesetzten Halters (3) aus der ersten Ausrichtung in die zweite Ausrichtung wenigstens zu unterstützen.

9. Haltevorrichtung nach einem der vorhergehenden Ansprüche, **dadurch gekennzeichnet, dass** der Formschlussabschnitt (310) des Halters (3) für einen formschlüssigen Eingriff in eine Öffnung (200, 220) an dem Sicherungselement (2, 22) vorgesehen ist oder der Formschlussabschnitt des Halters (3) mit einer Öffnung (312) für einen formschlüssigen Eingriff wenigstens eines Abschnitts des Sicherungselements (23) ausgebildet ist.

10. Haltevorrichtung nach Anspruch 9, **dadurch gekennzeichnet, dass** die Öffnung (200, 220) an dem Sicherungselement (2, 22) als Durchgangsöffnung ausgebildet ist, wobei, optional, der Formschlussabschnitt (310) des Halters (3) für eine körperliche Kontaktierung des Elektrogeräts (1) durch die als Durchgangsöffnung ausgebildete Öffnung (200, 220) des Sicherungselements (2, 22) vorgesehen ist.

11. Haltevorrichtung nach einem der vorhergehenden Ansprüche, **dadurch gekennzeichnet, dass** die Öffnung (20) an dem Sicherungselement (2) in Ansetzrichtung (+x) verschlossen ist, wobei, optional,
- die Öffnung (20) an dem Sicherungselement (2) durch einen an dem Sicherungselement (2) ausgeformten Dünnwandabschnitt (21) verschlossen ist, an dem eine Wandstärke einer die Öffnung aufweisenden Wandung des Sicherungselements (2) gegenüber an die Öffnung angrenzenden Abschnitten der Wandung reduziert ist, oder
- die Öffnung (20) an dem Sicherungselement (2) durch ein separates, an dem Sicherungselement (2) fixiertes Dünnwandelement, insbesondere eine Folie (21) verschlossen ist, wobei das Dünnwandelement (21) durch Kleben an dem Sicherungselement (2) fixiert ist oder zur Fixierung an dem Elektrogerät (1) vorgesehen ist.

12. Haltevorrichtung nach einem der vorhergehenden Ansprüche, **dadurch gekennzeichnet, dass** an zumindest einem Bereich einer in Ansetzrichtung (+x) liegenden Stirnfläche (310A) des Formschlussabschnitts (310) eine Reibfläche ausgebildet ist und/oder das Sicherungselement (2, 22, 23) ringförmig oder scheibenförmig oder als Hülle für das Elektrogerät (1) ausgebildet ist.

13. Haltevorrichtung nach einem der vorhergehenden Ansprüche, **dadurch gekennzeichnet, dass** der Halter (3) eine Elektronik (32) für eine Energie- und/oder Signalübertragung, insbesondere für kabelloses Laden umfasst.

14. Haltevorrichtung nach einem der vorhergehenden Ansprüche, **dadurch gekennzeichnet, dass** der Halter (3) als Zubehörteil für das Elektrogerät (1) oder als Kopplungsteil für die mechanische und/oder elektrische Kopplung des Elektrogeräts (1) mit wenigstens einer weiteren Komponente eingerichtet und vorgesehen ist, wobei, optional, an dem Halter (3) wenigstens ein elektrischer Anschluss (32A) für die elektrische Kopplung vorgesehen ist.

15. Verwendung eines Halters (3) mit einer zweiten Magnetanordnung (30) für die Verbindung mit einem eine erste Magnetanordnung (10) aufweisenden Elektrogerät (1), an dem ein Sicherungselement (2) fixiert ist, wobei der Halter (3) eingerichtet und vorgesehen ist, mit dem Sicherungselement (2) verbunden zu werden, um einer Verlagerung des Elektrogeräts (1) relativ zu dem Halter (3) entgegenzuwirken, und an dem Elektrogerät (1) über das Zusammenwirken der ersten und zweiten Magnetanordnungen (10, 30) gehalten zu werden.
